(19) Europäisches Patentamt
European Patent Office
Office européen des brevets

(11) **EP 1 991 016 A1**

(12) **EUROPEAN PATENT APPLICATION**
published in accordance with Art. 158(3) EPC

(43) Date of publication:
**12.11.2008 Bulletin 2008/46**

(51) Int Cl.:
*H04Q 7/36* (2006.01)      *H04B 7/26* (2006.01)
*H04Q 7/38* (2006.01)

(21) Application number: **06713193.8**

(22) Date of filing: **07.02.2006**

(86) International application number:
**PCT/JP2006/302050**

(87) International publication number:
**WO 2007/086149 (02.08.2007 Gazette 2007/31)**

(84) Designated Contracting States:
**DE FR GB IT**

(30) Priority: **27.01.2006 PCT/JP2006/301298**

(71) Applicant: **FUJITSU LIMITED**
**Kawasaki-shi,**
**Kanagawa 211-8588 (JP)**

(72) Inventors:
• **SHIMOMURA, Tsuyoshi**
**Kawasaki-shi, Kanagawa 211-8588 (JP)**

• **KIMURA, Dai**
**Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

(54) **BASE STATION, WIRELESS COMMUNICATION SYSTEM, AND PILOT PATTERN DECIDING METHOD**

(57) In a radio communication system which uses pilot signals during transmission from a user terminal to a base station, the base station creates and stores a rank table on a peak to average power ratio of each pilot pattern, extracts a transmission power of the user terminal or a power difference between a maximum transmission power and the transmission power of the user terminal on the basis of a receive signal from the user terminal, and allocates a pilot pattern of which peak to average power ratio is good to a user terminal of which transmission power is great, or the power difference is small, with reference to the rank table.

Or a pilot pattern in a rank according to the transmission status (e.g. transmission power, distance from the base station) of the user terminal is adaptively allocated to the user terminal.

## FIG. 30

**Description**

TECHNICAL FIELD

The present invention relates to a base station, a radio communication system and a pilot pattern decision method, and more particularly to a base station in a radio communication system which uses pilot signals having a predetermined pilot pattern during transmission from a user terminal to the base station, and a pilot pattern decision method of the base station.

BACKGROUND ART

In a radio communication system, such as a cellular system, data is demodulated by synchronization and channel estimation using a known pilot signal. In the case where adaptive modulation is used, a pilot signal is also used for estimating a signal to interference power ratio (SIR) to decide an optimum modulation system.
In the case of an uplink from a user terminal to a base station, a pilot pattern which has a good correlation characteristic is used as a pilot signal, so as to minimize interference from another user and multi-path interference.

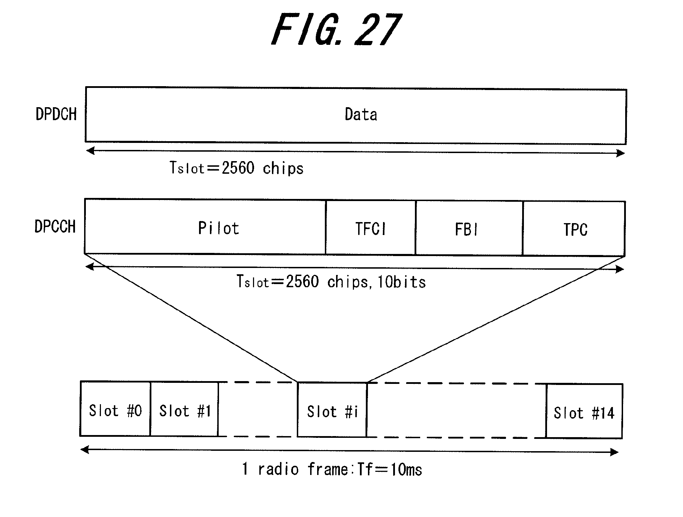

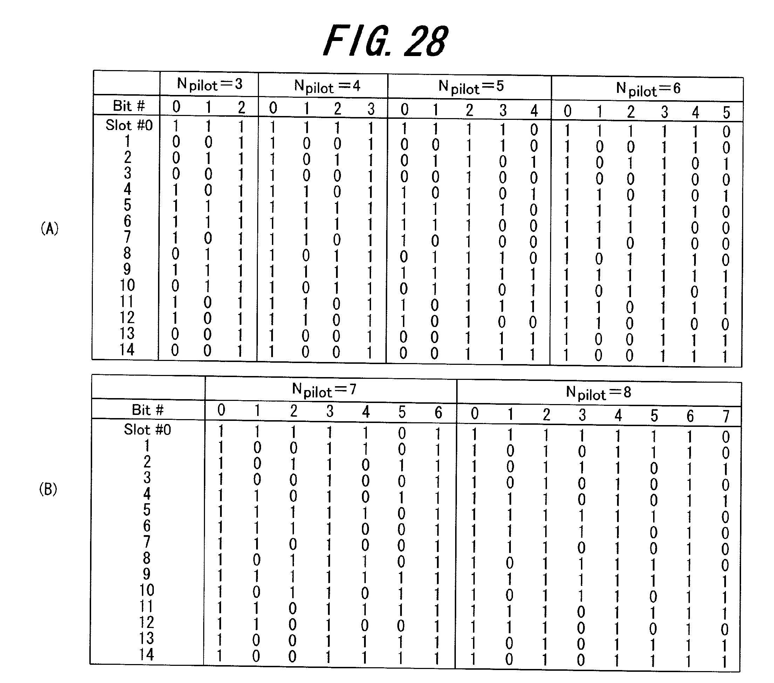

Fig. 27 is a diagram depicting a configuration of a frame of an uplink, which is standardized by 3GPP, and is comprised of a dedicated physical data channel (DPDCH) where only transmission data is sent, and a dedicated physical control channel (DPCCH) where such control data as pilot and TPC bit information are multiplexed and sent, and each channel is spread by orthogonal codes, then multiplexed and sent. One frame of an uplink is 10 msec., which consists of 15 slots (slot #0 to #14). Each slot of the dedicated physical control channel DPCCH consists of 10 bits, where the symbol speed is a constant 15 ksps, and a pilot, transmission power control data TPC, transport format combination indicator TFCI and feedback information FBI are sent. (A) of Fig. 28 is a pilot pattern of slot numbers slot #0 to #14 when the numbers of bits of the pilot in DPCCH are 3, 4, 5 and 6, and (B) is a pilot pattern of slot numbers slot #0 to #14 when the numbers of bits of the pilot are 7 and 8. In this case, if the numbers of bits of the pilot are the same, the patterns of the pilot signals are the same, but between different users, the pilot and data are collectively multiplied by a different scramble code having little cross-correlation, so respective pilot patterns of the different users which are finally transmitted have different sequences from each other, with little cross-correlation (see Non-patent Document 1 in the paragraph 0009).
Conventionally, a pilot pattern sequence is adopted so that the peak to average power ratio does not change much depending on the sequence number even if the scramble code such as Gold code is multiplied. Therefore an arbitrary pilot pattern selected from the pilot pattern sequence can be allocated to the user terminal.
Recently along with the development of modulation system, such as OFDM (Orthogonal Frequency Division Multiplex), IFDMA (Interleaved Frequency Division Multiple Access) and DFT-S-OFDM (Discrete Fourier Transform - Spread - Orthogonal Frequency Division Multiplex), which perform all or part of channel estimation processing in the frequency domain, a CAZAC (Constant Amplitude Zero Auto Correlation) sequence or GCL (Generalized Chirp Like) sequence are attracting attention as a sequence to be applied to a pilot pattern. As an example of a CAZAC sequence, the calculation formula of a Zadoff-Chu sequence, is shown below (see Non-patent Document 2).

$$c_k(n) = \exp\left[\frac{j\pi k}{L}n(n+1)\right] \qquad (L = odd)$$
$$c_k(n) = \exp\left[\frac{j\pi k}{L}n^2\right] \qquad (L = even) \tag{1}$$

Here n is a symbol number. If the integers k and L are mutually prime, the sequence length of the sequence $C_k(n)$ with a sequence number k is L, and n = 1 to L where k s L - 1.
A CAZAC sequence, of which auto correlation with respect to a cyclic shift is zero and which has a characteristic to maintain a constant amplitude in both time domain and frequency domain, is attracting attention as a pilot signal, and is proposed as a pilot pattern for uplink by 3GPP (see Non-patent Document 3).
However, in the CAZAC sequence, the peak to average power ratio PAPR greatly changes depending on the sequence number k. Therefore if the CAZAC sequence is arbitrarily allocated to each terminal just like the prior art, some terminal will drop reception quality. For example, if a sequence with a poor peak to average power ratio PAPR is allocated to a terminal which needs to transmit data at maximum transmission power, the peak power of the transmission signal increases and the peaks are suppressed, hence distortion is generated, and the transmission characteristics deteriorate. This aspect will now be described in detail.

In the case of an amplifier used for a transmitter, the power added efficiency becomes better as the output power increases. Therefore it is desirable to have an operating point closer to the maximum value of the output power as much as possible. However if the output power exceeds a predetermined threshold, a nonlinear distortion, which is not acceptable as a transmission signal, is generated, that is, a trade off relationship exists between distortion and the power added efficiency. As the characteristic of the peak to average power ratio of the transmission signal becomes better a difference of the operating point and the threshold which is referred to as back off can be decreased, and the power added efficiency can be improved.

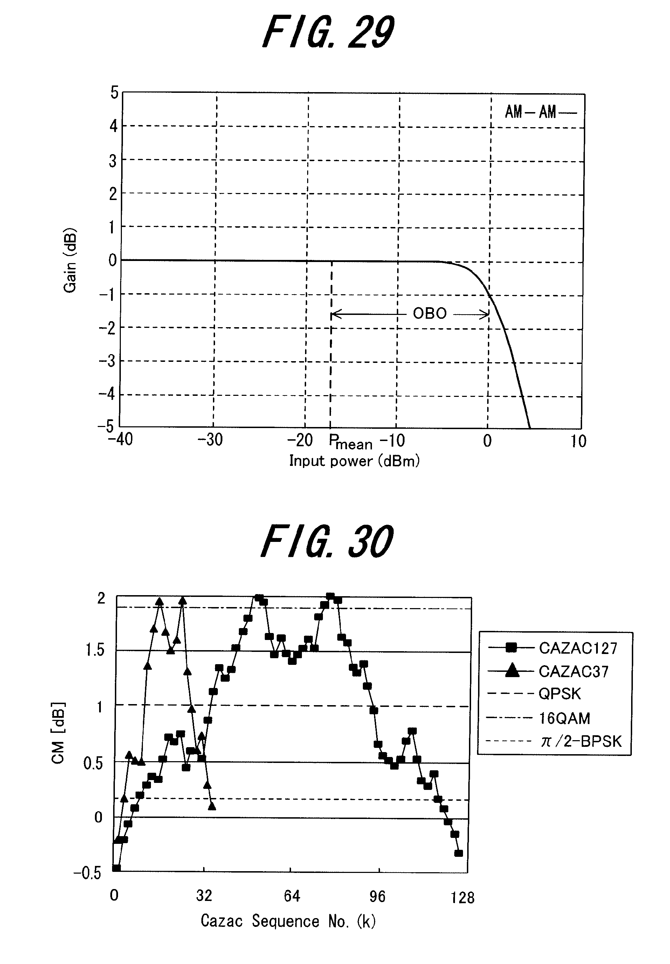

Fig. 29 is an example of the AM-AM characteristic which is an input power/gain characteristic of an amplifier for describing back off. In the amplifier, the gain characteristic is flat and the input/output characteristic is linear, while the input power is small. However when the input power becomes a certain level or more, the gain starts to decrease and a phase lag is generated, and the input/output characteristic becomes nonlinear. An output power level when the gain decreases 1 dB is called the "1 dB compression level", and the difference between this level and the average output power Pmean is defined as a back off 0B0. In the case of such a nonlinear amplifier, even if the average power level of the input signal exists in a linear portion, a signal at the maximum power level or a level close to this exceeds the 1 dB compression level depending on the combination of the back off 0B0 and the peak to average power ratio PAPR, and distortion is generated. Therefore the back off 0B0 is decided so as not to exceed the 1 dB compression level when an input signal at the maximum power level arrives, considering the peak to average power ratio PAPR. In other words, if the peak to average power ratio PAPR is small, it is possible to make the back off 0B0 small, thereby the power added efficiency of the amplifier can be improved. If the peak to average power ratio PAPR is large, however, it is impossible to make the back off 0B0 small, thereby the power added efficiency of the amplifier drops.

The peak to average power ratio PAPR has frequently been used to indicate the power derating of the amplifier with respect to a signal power, but an evaluation index called cubic metric (CM), which is defined by the following Expression (2), is currently used since the power derating can be more accurately expressed (Non-patent Document 4). In the present description, the phrase "peak to average power ratio" collectively refers to such an evaluation index as PAPR and cubic metric.

$$CM = \left\lfloor 20 * \log 10 ((v\_norm^3)_{rms}) - 20 * \log 10 ((v\_norm\_ref^3)_{rms}) \right\rfloor / 1.85 \qquad (2)$$

Here v_norm is an amplitude value of a normalized input signal, and v_norm_ref is an amplitude value of a reference signal. As the CM of the signal becomes greater, the peak to average power ratio becomes worse, greater back off is required, and the power added efficiency decreases.

Fig. 30 shows the CM characteristic of the Zadoff-Chu sequences, where one sequence length is 127 and the other sequence length is 37. For reference, CMs, when a random sequence is modulated by $\pi/2$ - BPSK, QPSK and 16QAM, are also shown. As Fig. 30 shows, the CM characteristic of a CAZAC sequence may be better than that of $\pi/2$ - BPSK or worse than that of 16QAM depending on the sequence number k.

In a case where, if a sequence such as CAZAC sequence of which CM characteristics have a very large dispersion depending upon the sequence length L and sequence number k, is used as a pilot signal of the uplink, the problem lies in the design of the back off of the amplifier of the user terminal. If the back off of the amplifier of the user terminal is designed to be large, based on the worst value of the CM characteristics, the generation of distortion can be prevented regardless the CM characteristics, but the average power added efficiency decreases. If the back off of the amplifier is designed based on the average value of the CM characteristics, on the other hand, when data is transmitted with maximum transmission power or transmission power close to this, a distortion is generated in the pilot patterns having bad CM characteristics since the 1 dB compression level is exceeded, and transmission efficiency deteriorates. As described above, when a sequence such as CAZAC sequence which is suitable for channel estimation but of which dispersion of the peak to average power ratio is large, is applied to a pilot signal of an uplink, a problem lies in regard to how to allocate pilot patterns to each user terminal. If a pilot pattern is allocated to each user arbitrarily, regardless the peak to average power ratio, as in the case of a prior art, the waveform of the signal which is sent from the user terminal with a large power is influenced by this allocated pilot pattern, and a great distortion may be generated in some cases.

With the foregoing in view, it is an object of the present invention to prevent the generation of distortion in a transmission amplifier of the user terminal, even if the user terminal uses a sequence of which dispersion of the peak to average power ratio is large as a pilot pattern, and to improve the reception quality in a base station.

It is another object of the present invention to prevent the generation of distortion in a transmission amplifier, even if the user terminal sends data at maximum transmission power or transmission power close thereto.

It is another object of the present invention to prevent distortion even if back off of the transmission amplifier is small, and to improve the average power added efficiency as a result, and to increase the duration of the battery of the user terminal.

It is still another object of the present invention to decrease interference between cells or between sectors. [Non-patent Document 1] 3GPP TS25.211 (portion specifying pilot signal) and TS25.213 (portion specifying scramble code): http://www.3gpp.org/

[Non-patent Document 2] D. C. Chu, "Polyphase Codes With Good Periodic Correlation Properties", IEEE Transactions on Information Theory, pp. 531 - 532, July 1972
[Non-patent Document 3] 3GPP TR25.814: http://www.3gpp.org/
[Non-patent Document 4] TSG RAN WG1 #37, Montreal, Canada, May 10 - 14, 2004: Tdoc#R 1-040642

DISCLOSURE OF THE INVENTION

The present invention relates to a base station in a radio communication system which uses pilot signals having a predetermined pattern during transmission from a user terminal to the base station, and the radio communication system and the pilot pattern decision method.

A base station of the present invention comprises: a storage unit which stores a rank table on a peak to average power ratio of each pilot pattern; a pilot pattern allocation unit which allocates pilot patterns to terminals in a sequence of a better peak to average power ratio, with reference to the rank table; and a pilot pattern notification unit which notifies the allocated pilot pattern to the terminal.

Another base station of the present invention comprises: a storage unit which stores a rank table on a peak to average power ratio of each pilot pattern; a transmission status identification unit which identifies transmission status of a user terminal; a pilot pattern allocation unit which adaptively allocates a pilot pattern having a rank according to the transmission status of the user terminal to the user terminal; and a pilot pattern notification unit which notifies the allocated pilot pattern to a terminal. In this base station, each unit operates according to one of the following (1) to (8).

(1) The transmission status identification unit extracts a transmission power of the user terminal or a power difference between a maximum transmission power and the transmission power of the user terminal on the basic of a receive signal from the user terminal, and the pilot pattern allocation unit allocates a pilot pattern having a good peak to average power ratio to a user terminal of which transmission power is high or to a user terminal in which said power difference is small, with reference to the rank table.
(2) The transmission status identification unit extracts position information of a user terminal from a signal received from the user terminal, and calculates a distance between the user terminal and the base station using the position information, and the pilot pattern allocation unit allocates a pilot pattern having a good peak to average power ratio to a user terminal which is far away from the base station, with reference to the rank table.
(3) The storage unit classifies the rank table of the pilot patterns and stores each class of the pilot patterns, the transmission status identification unit identifies whether the user terminal is in a status of non-data transmission or in non-data transmission, and the pilot pattern allocation unit allocates a pilot pattern in a class according to the data transmission block to a user terminal if it is in the status of data transmission, and allocates a pilot pattern in a class according to the non-data transmission block to a user terminal if it is in the status of non-data transmission.
(4) The storage unit classifies and stores the rank table of the pilot patterns and stores each class of the pilot patterns, the transmission status identification unit identifies the communication capability of a user terminal, and the pilot pattern allocation unit allocates a pilot pattern in a class according to the communication capability of the user terminal, to the user terminal.
(5) The storage unit classifies and stores the rank table of the pilot patterns and stores each class of the pilot patterns, the transmission status identification unit identifies a channel quality indicator CQI of a user terminal, and the pilot pattern allocation unit allocates a pilot pattern in a class according to the CQI to the user terminal.
(6) The storage unit classifies the rank table of the pilot patterns and stores each class of the pilot patterns, the transmission status identification unit calculates a function value of a function of which variables are a channel quality indicator CQI of a user terminal, a distance between the user terminal and the base station, and a modulation method of the user terminal, and the pilot pattern allocation unit allocates a pilot pattern in a class according to the function value to the user terminal.
(7) The storage unit classifies the rank table of the pilot patterns and stores each class of the pilot patterns, the transmission status identification unit identifies real-time nature of user data which is sent by a user terminal, and the pilot pattern allocation unit allocates a pilot pattern in a class according to the presence or absence of the real-time nature of the user data to the user terminal.
(8) The storage unit classifies the rank table of the pilot patterns and stores each class of the pilot patterns, the transmission status identification unit identifies a modulation system of a user terminal, and the pilot pattern allocation unit allocates a pilot pattern in a class according to the modulation system of the user data to the user terminal.

Another base station of the present invention comprises: a storage unit which stores pilot patterns which are stored so that pilot patterns to be used are different between adjacent base stations or between adjacent sectors, and pilot patterns in a same base station or in a same sector are different depending on the purpose of use; a pilot pattern allocation unit which allocates a pilot pattern according to the purpose of use of a user terminal, to the user terminal, with reference to a correspondence of the purpose of use and the pilot; and a pilot pattern notification unit which notifies the allocated pilot pattern according to the purpose of use to the user terminal. This purpose of use is a modulation system, and the pilot patterns are set so that pilot patterns in a same base station or a same sector are different depending on the modulation system.

A radio communication system of the present invention is a radio communication system which uses pilot signals having a predetermined pattern during transmission from a user terminal to a base station, wherein the base station comprises: a storage unit which stores a rank table on a peak to average power ratio of each pilot pattern for each purpose of use; a pilot pattern allocation unit which allocates the pilot patterns according to the purpose of use to a user terminal respectively, with reference to the rank table; and a pilot pattern notification unit which notifies the pilot patterns according to the purpose of use to the user terminal respectively, and the user terminal comprises: a storage which stores the pilot patterns according to the purpose of use respectively; a pilot generation unit which generates a pilot pattern according to purpose of use; and a transmission unit which sends the pilot pattern. The purpose of use are classified into a purpose of use for a data transmission block and another purpose of use for a non-data transmission block. The pilot pattern allocation unit adaptively allocates a pilot pattern for the data transmission block to the user terminal based on the rank table for the data transmission block, and adaptively allocates a pilot pattern for the non-data transmission block to the user terminal based on the rank table for the non-data transmission block.

BRIEF DESCRIPTION OF THE DRAWINGS

Fig. 1 is a block diagram of a base station according to the first embodiment;
Fig. 2 is a block diagram of a base station according to the second embodiment;
Fig. 3 is a diagram depicting a signal format;
Fig. 4 shows a pilot pattern management table;
Fig. 5 is a block diagram of a user terminal according to the second embodiment;
Fig. 6 is a block diagram of a base station according to the third embodiment;
Fig. 7 is a block diagram of a user terminal according to the third embodiment;
Fig. 8 is a block diagram of a base station according to the first modified example;
Fig. 9 is a block diagram of a user terminal according to the first modified example;
Fig. 10 is a block diagram of a base station according to the second modified example;
Fig. 11 is a block diagram of a user terminal according to the second modified example;
Fig. 12 is a block diagram of a base station according to the third modified example;
Fig. 13 is a block diagram of a base station according to the fourth embodiment;
Fig. 14 is a block diagram of a base station according to the fifth embodiment;
Fig. 15 is a block diagram of a base station according to the sixth embodiment;
Fig. 16 is a block diagram of a user terminal according to the sixth embodiment;
Fig. 17 shows a table which indicates the number of available pilot patterns for each combination of band division count and modulation system when the band of 5 MHz is frequency divided and used by a plurality of user terminals;
Fig. 18 is a block diagram of a base station according to the seventh embodiment;
Fig. 19 is a table to show the pilot pattern sequence number which can be used for a $\pi/2$ - BPSK modulation system and QPSK modulation system when pilot patterns of a CAZAC sequence having a predetermined length are ranked based on the peak to average power ratio;
Fig. 20 is a diagram depicting pilot patterns to be allocated to each cell BS1 to BS7 in a hexagonal cell layout;
Fig. 21 shows a pilot pattern management table when a pilot pattern sequence number of each modulation system is set for a plurality of sequence lengths;
Fig. 22 is a diagram depicting a case of allocating one or more pilot patterns in each cell BS1 to BS7 for each modulation system in a hexagonal cell layout;
Fig. 23 is a block diagram of a user terminal according to the seventh embodiment;
Fig. 24 shows concrete pilot pattern setting examples when the number of pilot patterns (referred to as number of repeats) that can be used in each modulation system is three;
Fig. 25 shows a pilot pattern example when pilot patterns are allocated to each cell (base station) in the case when the hexagonal cell layout in Fig. 20 is expanded;

Fig. 26 shows an example of a pilot pattern management table TBL considering the pilot patterns in the non-data transmission block;

Fig. 27 is a diagram depicting a configuration of a frame of the uplink, which is standardized by 3GPP;

Fig. 28 shows the pilot patterns of slot number #0 to #14 of the pilots in DPCCH;

Fig. 29 shows an example of the AM - AM characteristic (input power/gain characteristic) of an amplifier, for explaining back off; and

Fig. 30 shows the CM characteristic of the Zadoff - Chu sequences of which sequence lengths are 127 and 37 respectively.

## BEST MODE FOR CARRYING OUT THE INVENTION

### (A) First embodiment

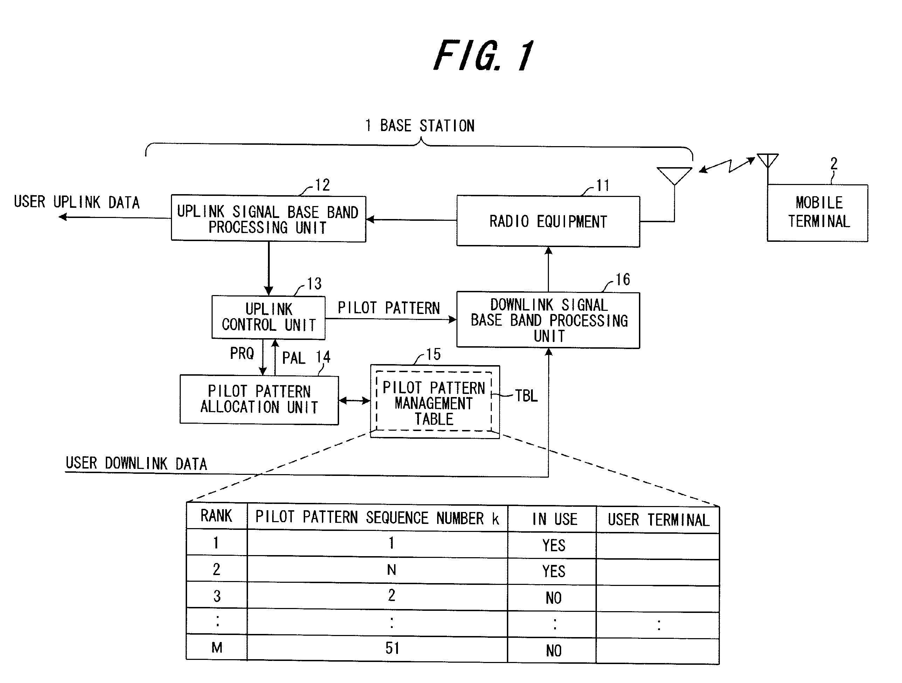

Fig. 1 is a block diagram of a base station according to a first embodiment, where a base station 1 stores a rank table on a peak to average power ratio of each pilot pattern, and allocates a pilot in order of goodness of peak to average power ratio to a user terminal 2 when a connection is established with the user terminal 2.

A radio equipment 11 has a transmitter and a receiver, and the receiver converts the frequency of a receive signal from a radio frequency into a base band frequency, and inputs the base band signal to an uplinksignal base band processing unit 12. The base band processing unit 12 performs demultiplexing and demodulating of user data and control data from the input signal, and inputs the control data to an uplink control unit 13. The uplink control unit 13 requests a pilot pattern allocation unit 14 to allocate a pilot pattern using a signal PRQ when a connection is set.

When each pilot pattern of a CAZAC sequence is ranked based on the peak to average power ratio, a storage unit 15 holds a rank table (pilot pattern management table TBL) where a pilot pattern sequence number k, use state and allocation destination user terminal ID are listed in turn from a better ranking. The pilot pattern allocation unit 14, which received the pilot pattern allocation request PRQ from the uplink control unit 13, selects a sequence number of a pilot pattern which is not in use and has better peak to average power ratio, with reference to the pilot pattern management table TBL and notifies the selected sequence number to up link control unit 13. The pilot pattern allocation unit 14 also enters "YES" to the "IN USE" field of the allocated pilot pattern sequence number, and enters the allocated user terminal ID to the user terminal field.

A downlink signal base band processing unit 16 encodes user data and a pilot pattern sequence number, and performs modulation and multiplexing, and inputs the result to a transmitter of the radio equipment 11. The transmitter converts the frequency of the base band signal into a radio frequency, then amplifies the radio frequency and sends the result to the user terminal 2. The user terminal 2 demodulates the pilot pattern sequence number from the receive signal, and hereafter generates a pilot pattern having this sequence number, and multiplexes this pilot, user data and control data, and sends the result to the base station.

The above is an operation at the time when a connection is set, whereas when a connection is released, the pilot pattern allocation unit 14 enters "NO" in a "IN USE" field of the pilot pattern sequence number, which has been allocated to the user terminal which is released, and enters a blank in the user terminal field.

According to the first embodiment, a pilot pattern sequence number is allocated sequentially from one with a better peak to average power ratio, so the user terminal has high probability to use a pilot signal with good peak to average power ratio. As a result, even if the transmission power is high, the generation of distortion in the transmission amplifier of the user terminal can be prevented, and reception quality in the base station can be improved.

### (B) Second Embodiment

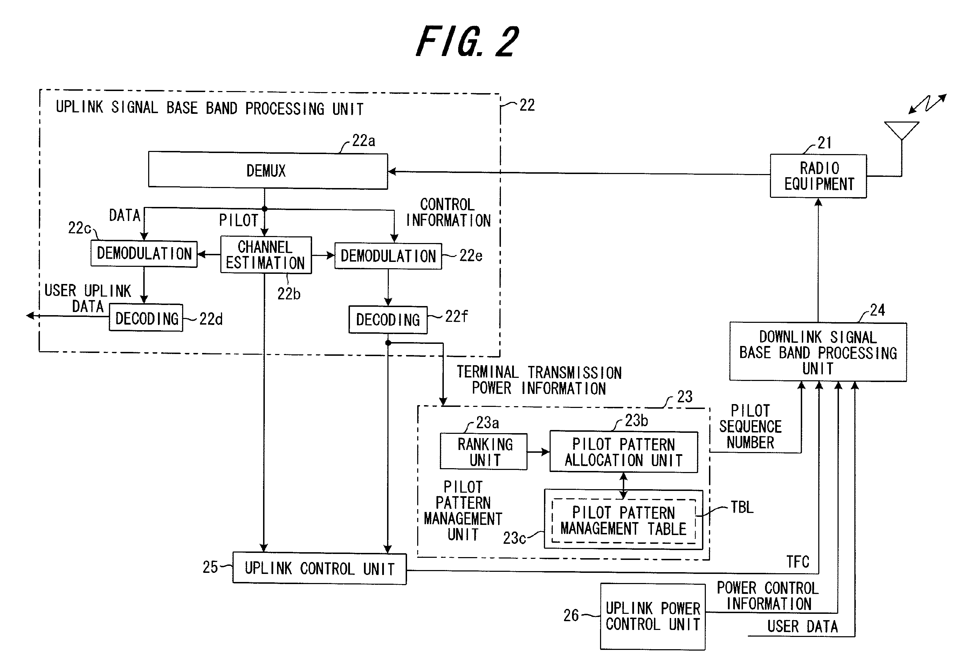

Fig. 2 is a block diagram of a base station according to the second embodiment. In the second embodiment, a pilot pattern is decided based on the transmission power of the user terminal.

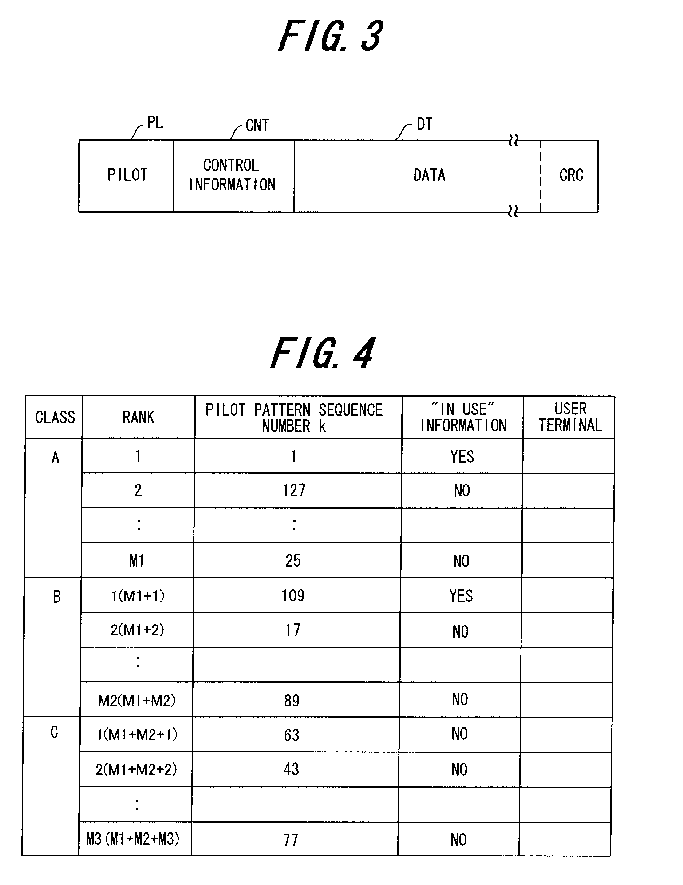

A radio equipment 21 includes a transmitter and a receiver, which are not illustrated, and the receiver converts a frequency of a receive signal from a radio frequency into a base band frequency, and inputs the base band signal to an uplink signal base band processing unit 22. The signal format consists of a pilot PL, control information CNT, user data DT, and CRC for error detection, for example, as shown in Fig. 3.

A demultiplexing unit 22a of the base band processing unit 22 demultiplexes a pilot, user data and control data from the input signal, a channel estimation unit 22b estimates a channel (transmission path characteristic) using the pilot signal and outputs a channel estimation value, a demodulation unit 22c performs channel compensation based on the channel estimation value, and then performs demodulation processing, and a decoding unit 22d performs an error correction decoding processing, and outputs user data. A demodulation unit 22e performs channel compensation based on the channel estimation value, and then performs demodulation processing, and a decoding unit 22f performs error correction decoding processing, and outputs control information. This control information includes the transmission power level of the user terminal or the difference power information between the maximum transmission power level and the transmission power level of the user terminal.

A ranking unit 23a of a pilot pattern management unit 23 ranks the user terminal based on the transmission power level or difference power of the user terminal included in the control information. For example, if there are three classes A, B and C, in order from large transmission power level to small transmission power level, the ranking unit 23a decides a class to which the transmission power level of the user terminal belongs, and inputs the class to a pilot pattern allocation unit 23b.

When each pilot pattern of a CAZAC sequence is ranked based on the peak to average power ratio, a storage unit 23c holds a rank table (pilot pattern management table TBL) where a pilot pattern sequence number k, use state and allocation destination user terminal ID are listed in turn from a better ranking (see Fig. 4). As Fig. 4 shows, in this table TBL, the pilot pattern sequence numbers k are farther classified into three classes A, B and C from a better ranking. The number of classes is not limited to three, but may be two, or four or more.

The pilot pattern allocation unit 23b, which received the class of the transmission power level of the user terminal from the ranking unit 23a, refers to the same class in the pilot pattern management table TBL, as the class of this transmission power level, determines a pilot pattern sequence number which is not in use in this class and has a better peak to average power ratio, and inputs this pilot pattern sequence number to a downlink signal base band processing unit 24. The pilot pattern allocation unit 23b enters "YES" to the "IN USE" information field of the allocated pilot pattern sequence number, and enters the user terminal ID with which the pilot pattern is allocated to the user terminal field.

An uplink control unit 25 decides the modulation system and the encoding ratio of the user terminal based on a channel estimation value and transmission power level of the user terminal, and creates a TFC (Transport Format Combination), and inputs the TFC into the downlink signal base band processing unit 24. An uplink power control unit 26 performs a known uplink power control, creates power control information, and inputs this power control information to the downlink signal base band processing unit 24. The uplink power control is a control in which SIR is measured using a receive pilot signal, power control information for controlling the transmission power of the user terminal is created so that this SIR becomes a target SIR, and is sent to the user terminal, and the user terminal decides the transmission power level using this power control information.

The downlink signal base band processing unit 24 encodes the user data, the pilot pattern sequence number, the power control information and the TFC, then modulates and multiplexes these data, and inputs the result to the transmitter of the radio equipment 21. The transmitter converts the frequency of the base band signal into a radio frequency, and then amplifies and sends the radio signals to the user terminal. The user terminal demodulates the pilot pattern sequence number based on the receive signal, and hereafter generates a pilot pattern having this sequence number, and multiplexes this pilot, user data and control data, and sends the multiplexed data to the base station. The user terminal also decides the transmission power level based on the power control information.

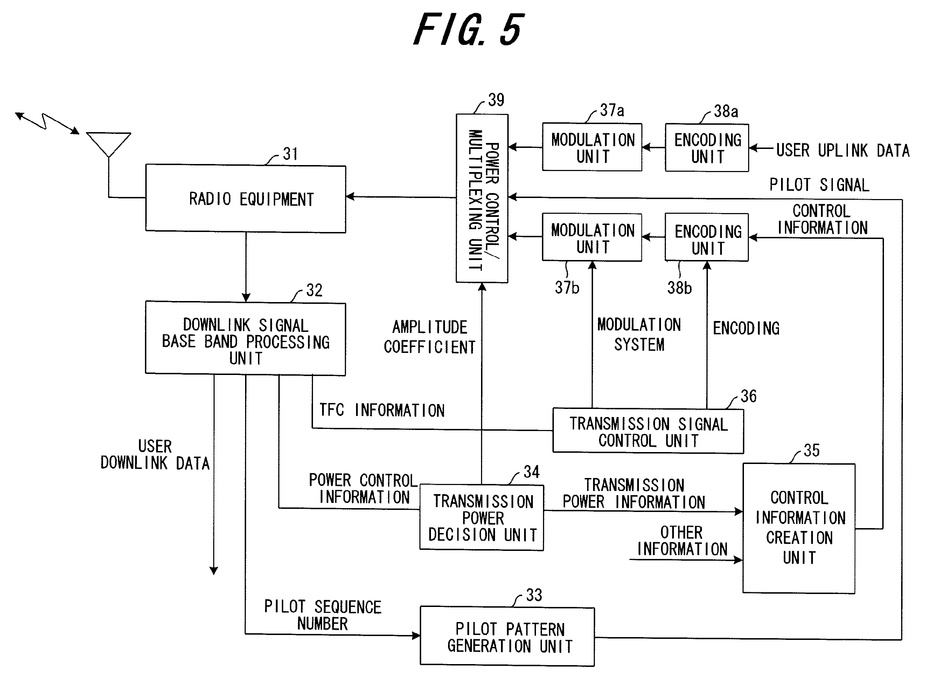

Fig. 5 is a block diagram of the user terminal in the second embodiment. A receiver of a radio equipment 31 converts the frequency of a receive signal from a radio frequency into a base band frequency, and inputs the base band signal to a downlink signal base band processing unit 32.

The base band processing unit 32 demultiplexes user data, pilot pattern sequence number and control data (power control information, TFC information) from the input signal, and a pilot pattern generation unit 33 generates a pilot signal based on the pilot pattern sequence number which is input. A transmission power decision unit 34 decides a transmission power level and amplitude coefficient based on the power control information and inputs these to the units 35 and 39 respectively, and a control information creation unit 35 creates control information which is comprised of a transmission power level and other information, and inputs the control information to a encoding unit 38b. A transmission signal control unit 36 inputs a modulation system and encoding ratio included in the TFC information to modulation units 37a and 37b and encoding units 38a and 38b, respectively. The encoding units 38a and 38b encode the user data and control information using the encoding system and the encoding ratio which are input, and the modulation units 37a and 37b modulate input data using the modulation system which is input, and a power control/multiplexing unit 39 performs power control by multiplying the user data, control information and pilot signal by the amplitude coefficient, then multiplexes the data, and inputs the result to the transmitter of the radio equipment 31. The transmitter converts a frequency of a base band signal into a radio signal, and then amplifies and sends the radio signal to the base station.

If the transmission power level of the user terminal is changed and the class of this transmission power level changes, the base station deletes the previous allocation, and controls so that the pilot pattern in the new class is allocated.

In the above description, the transmission power decision unit 34 decides the transmission power level based on the power control information from the base station, but could also decide by other methods. For example, the transmission power level is gradually increased in the user terminal independently, and when control information which indicates the transmission power level is OK is received from the base station, the transmission power level at this time is notified to the base station.

Also in the above description, the embodiment of allocating a pilot pattern having a good peak to average power ratio to a user terminal having a high transmission power is described, but it may be controlled such that a power difference between the maximum transmission power and the actual transmission power is sent from the user terminal to the base station, and a pilot pattern with a good peak to average power ratio is allocated to a user terminal in which the power difference is small.

As described above, according to the second embodiment, the generation of distortion in the transmission amplifier of the user terminal can be prevented even if the user terminal uses a sequence such as CAZAC sequence of which dispersion of peak to average power ratio is great, as a pilot pattern, and reception quality in the base station can be improved.

Also according to the second embodiment, a pilot pattern sequence number having a good peak to average power ratio is allocated to a user terminal of which transmission power is high, so the generation of distortion in the transmission amplifier can be prevented even if the user terminal sends data with a maximum transmission power or transmission power close thereto.

Also according to the second embodiment, the generation of distortion can be prevented even if back off of the transmission amplifier is small, and as a result, the average power added efficiency can be improved, and the duration of the battery of the user terminal can be increased.

(C) Third embodiment

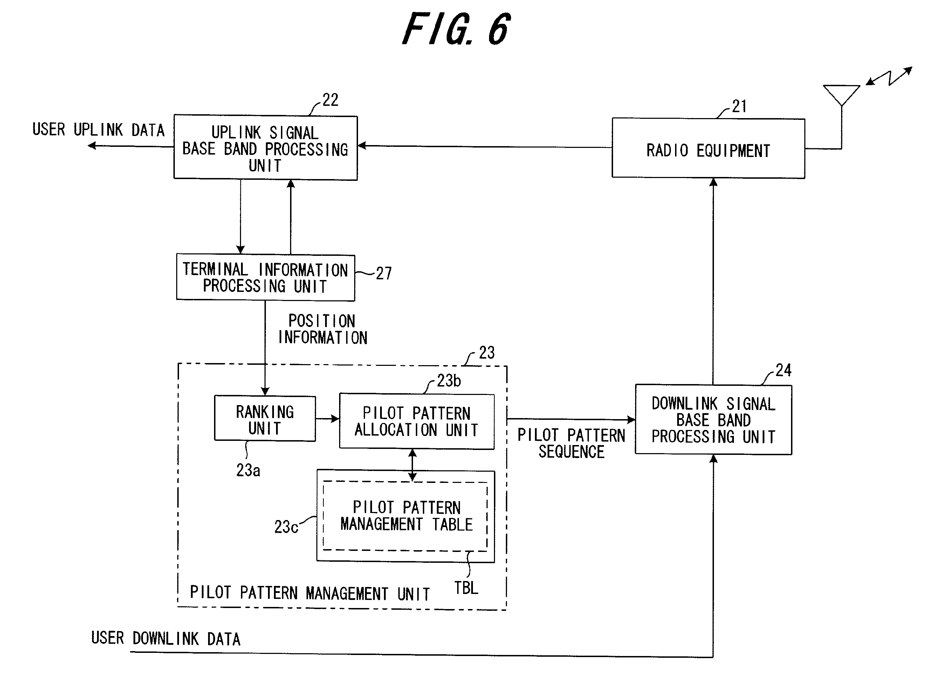

Fig. 6 is a block diagram of a base station according to a third embodiment, where the same components as those in the second embodiment in Fig. 2 are denoted with the same reference symbols.

Since the transmission power of a user terminal increases as the user terminal becomes more distant from the base station, a pilot pattern is decided based on the position information (distance from the base station) of the user terminal in the third embodiment.

A receiver of a radio equipment 21 converts a frequency of a receive signal from a radio frequency into a base band frequency, and inputs the base band signal to an uplink signal base band processing unit 22. The base band processing unit 22 demultiplexes a pilot, user data and control data from the input signal, and inputs control information to a terminal information processing unit 27. The terminal information processing unit 27 extracts position information of a user terminal from the control information which is input, and inputs the position information to a pilot pattern management unit 23.

A ranking unit 23a of the pilot pattern management unit 23 calculates the distance between a user terminal and the base station by the user terminal position and the base station position which is known, normalizes this distance by dividing with a cell radius, and ranks the user terminal based on the normalized distances. For example, if there are three classes A, B and C, in order from large normalized distance to small normalized distance, the ranking unit 23a decides a class to which the normalized distance of the user terminal belongs and inputs the class to a pilot pattern allocation unit 23b.

A storage unit 23c holds a rank table (pilot pattern management table TBL), as shown in Fig. 4.

The pilot pattern allocation unit 23b, which received a class according to the normalized distance of the user terminal from the ranking unit 23a, refers to the same class in the pilot pattern management table as the class of normalized distance, determines a pilot pattern sequence number which is not in use in this class and has a better peak to average power ratio, and inputs this pilot pattern sequence number to a downlink signal base band processing unit 24. The pilot pattern allocation unit 23b enters "YES" in the "IN USE" information field of the allocated pilot pattern sequence number, and enters the user terminal ID to which the pilot pattern is allocated to the user terminal field.

The downlink signal base band processing unit 24 encodes user data and control information including a pilot pattern sequence number, then modulates and multiplexes these information and inputs the result to a transmitter of the radio equipment 21. The transmitter converts a frequency of a base band signal into a radio frequency, and then amplifies the radio signal and sends the amplified radio signal to the user terminal.

The user terminal demodulates the pilot pattern sequence number from the receive signal, and hereafter generates a pilot pattern having this pilot pattern sequence number.

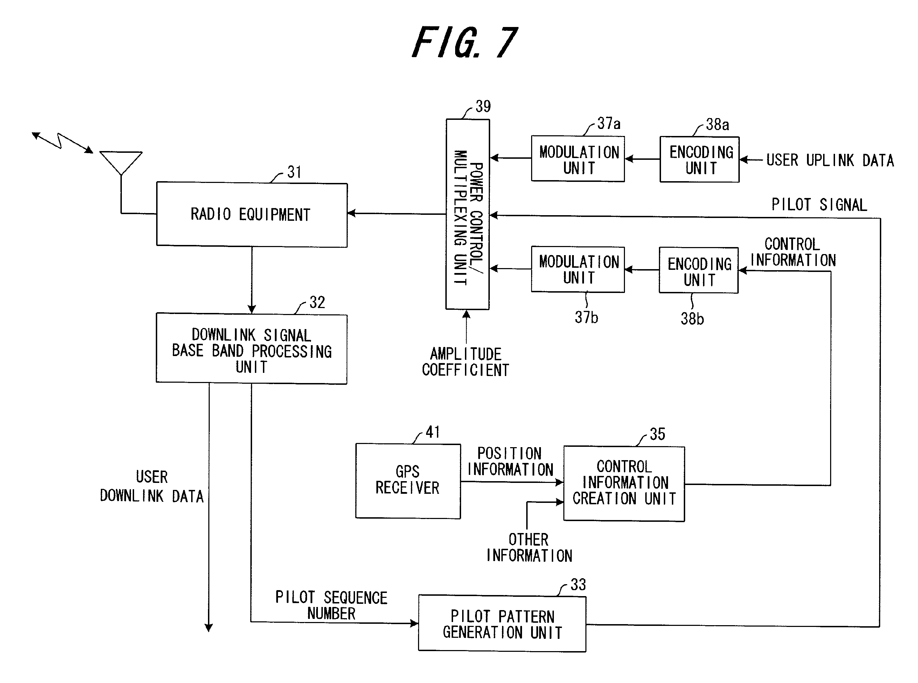

Fig. 7 is a block diagram of the user terminal in the third embodiment, where the same components as those in the second embodiment in Fig. 5 are denoted with the same reference symbols.

A receiver of a radio equipment 31 converts a frequency of a receive signal from a radio frequency into a base band frequency, and inputs the base band signal to a downlink signal base band processing unit 32. The base band processing unit 32 demultiplexes user data and control data including a pilot pattern sequence number from the input signal, and a pilot pattern generation unit 33 generates a pilot signal based on the pilot pattern sequence number which is input.

A GPS receiver 41 measures the position (by geographic coordinates) of the user terminal, and a control information creation unit 35 creates control information including position information and other information, and outputs the control information. Encoding units 38a and 38b encode the user data and control information using a predetermined encoding system and encoding ratio, modulation units 37a and 37b modulate the input data using a predetermined modulation system, and a power control/multiplexing unit 39 performs power control by multiplying the user data, control information and pilot signal by an amplitude coefficient determined in a transmission power control unit, which is not illustrated, then multiplexes theses data and inputs the result to the transmitter of the radio equipment 31. The transmitter converts a frequency of a base band signal into a radio frequency, and then amplifies the radio signal and sends the amplified radio signal to the base station.

If the class of the normalized distance is changed by the change of position of the user terminal, the base station deletes the previous allocation of the pilot pattern, and controls so that the pilot pattern in the new class is allocated.

In the above description, a pilot pattern sequence number is allocated based on the distance between the user terminal and the base station, but may be allocated based on SIR. In other words, SIR is measured using a pilot signal sent by the user terminal, and it is estimated whether a user terminal exists at an edge of the cell or at the center of the cell based on this SIR, and a pilot pattern with good peak to average power ratio is allocated to a user terminal which exists at an edge of the cell.

According to the third embodiment, a pilot with good peak to average power ratio is allocated to a user terminal which is far away from the base station, so the generation of distortion in the transmission amplifier can be prevented even if the user terminal transmits data with maximum transmission power or transmission power close thereto. Also according to the third embodiment, effects similar to the second embodiment can be implemented.

First modified example

In the third embodiment, a pilot pattern is decided based on the position information of the user terminal, but a pilot pattern can also be decided in the same manner as the third embodiment, using information on propagation path conditions (CQI: channel quality indicator). In other words, if the propagation path conditions are good, the transmission power becomes low, and if the propagation path conditions are poor, the transmission power becomes high. Therefore in the first modified example, a pilot pattern is decided based on CQI.

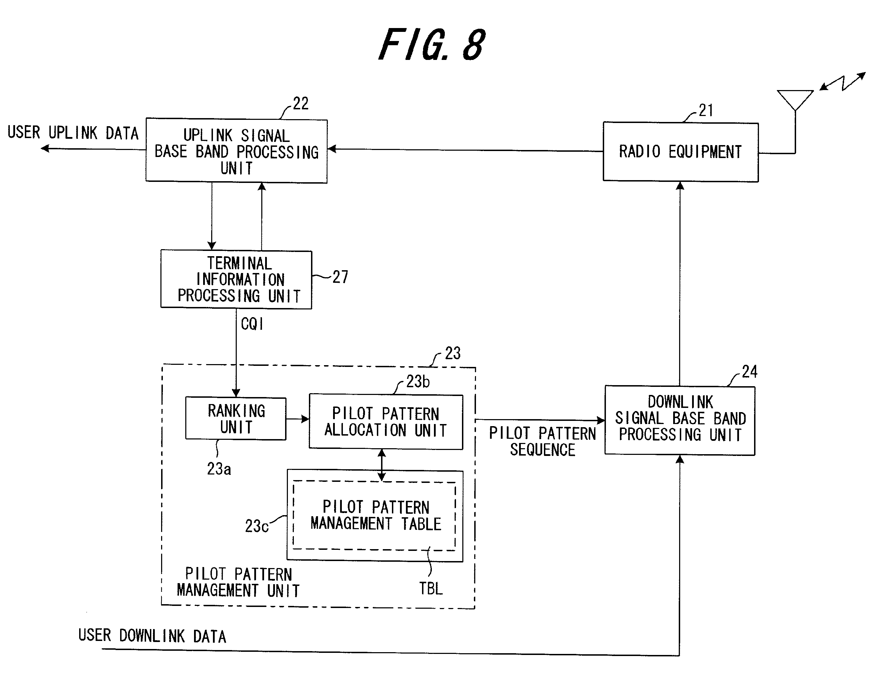

Fig. 8 is a block diagram of a base station in such a case, and is roughly the same as Fig. 6, and differences are that a terminal information processing unit 27 extracts the CQI from the control information sent from the user terminal, and that a pilot pattern is decided based on this CQI.

The terminal information processing unit 27 extracts a channel quality indicator CQI of the user terminal from the control information which is input, and inputs the CQI to a pilot pattern management unit 23. A ranking unit 23a of the pilot pattern management unit 23 ranks the user terminal based on the CQI which is input. For example, if there are three classes A, B and C, in order from small CQI to large CQI, the ranking unit 23a decides a class to which the CQI of the user terminal belongs and inputs the class to a pilot pattern allocation unit 23b. The pilot pattern allocation unit 23b, which received a CQI class of the user terminal, refers to the same class in the pilot pattern management table TBL as this CQI class, determines a pilot pattern sequence number which is not in use in this class and has better peak to average power ratio, and inputs this pilot pattern sequence number to a downlink signal base band processing unit 24, and sends the pilot pattern sequence number to the user terminal. The user terminal demodulates the pilot pattern sequence number from the receive signal, and hereafter generates a pilot pattern having this pilot pattern sequence number.

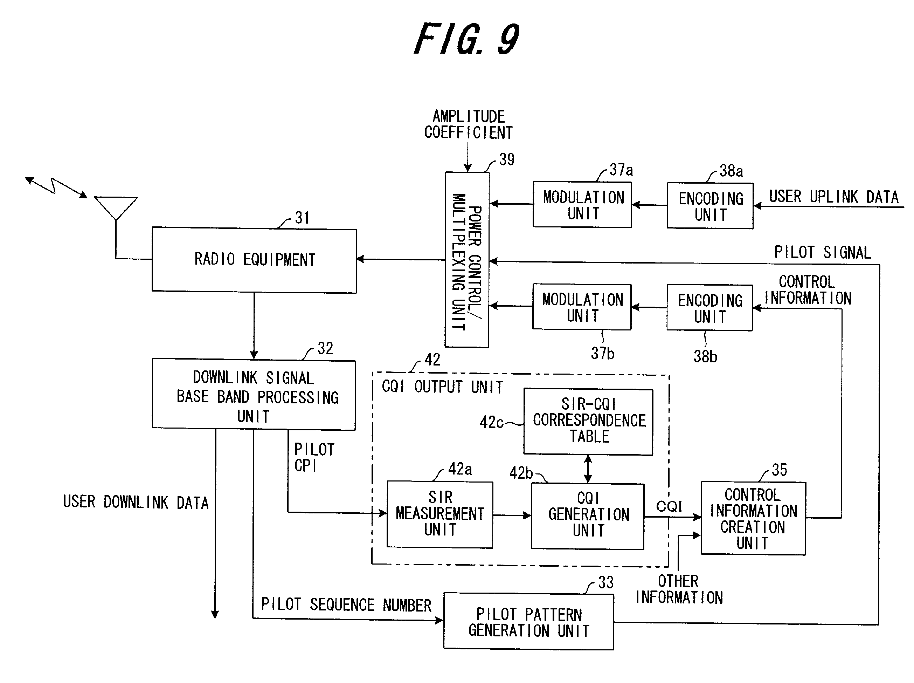

Fig. 9 is a block diagram of the user terminal in the first modified example, where the same components as those in the third embodiment of Fig. 7 are denoted with the same reference symbols. A difference is that a CQI output unit 42 is disposed, instead of the GPS receiver.

A receiver of a radio equipment 31 converts a frequency of a receive signal from a radio frequency into a base band frequency, and inputs the base band signal to a downlink signal base band processing unit 32. The base band processing unit 32 demultiplexes the user data, the pilot pattern sequence number and the common pilot CPI from the input signal, and a pilot pattern generation unit 33 generates a pilot signal based on the pilot pattern sequence number which is input.

An SIR measurement unit 42a of a CQI output unit 42 measures the SIR using the common pilot CPI, and a CQI generation unit 42b generates a CQI using an SIR - CQI correspondence table 42c. A control information creation unit 35 creates control information including a CQI, and outputs this control information. Hereafter the user terminal operates in the same manner as the third embodiment, and notifies the CQI to the base station.

If the CQI class is changed by the change of the CQI of the user terminal, the base station deletes the previous allocation of the pilot pattern, and controls so that the pilot pattern in the new class is allocated.

According to the first modified example, a pilot with good peak to average power ratio is allocated to a user terminal with a small CQI, so the generation of distortion in the transmission amplifier can be prevented even if the transmission path conditions become bad, and the user terminal transmits signal with maximum transmission power or transmission power close thereto.

Second modified example

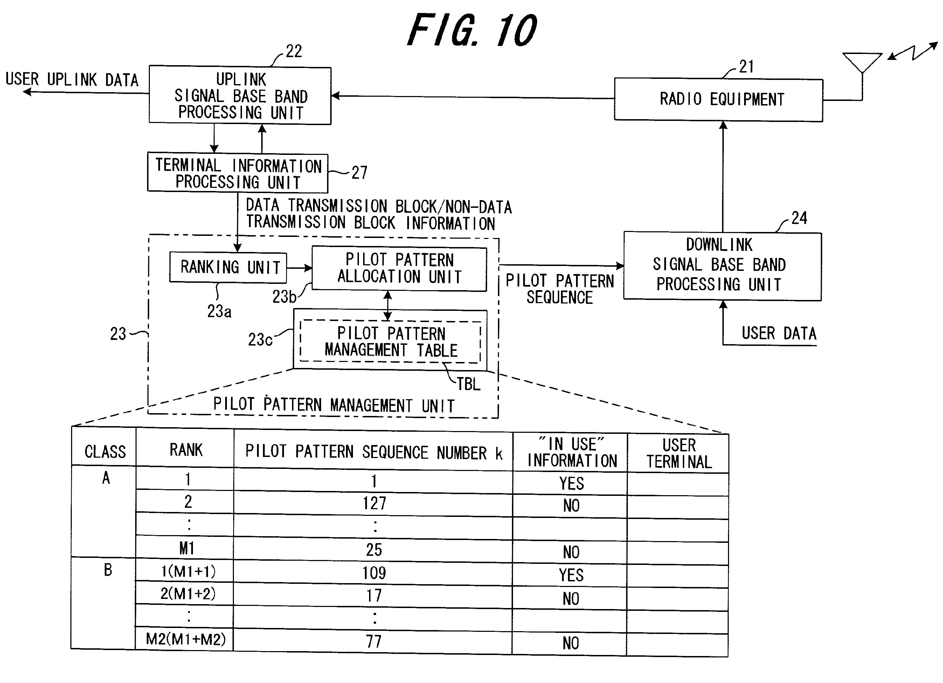

Fig. 10 is a block diagram of a base station according to a second modified example. There is no problem even if the peak to average power ratio of a pilot during a period of time when data is not transmitted (non-data transmission block) is lower than the peak to average power ratio of a pilot during a period of time when data is transmitted (data transmission block). Therefore as Fig. 10 shows, pilot pattern sequence numbers are classified into two classes: class A of which peak to average power ratio is good, and class B of which peak to average power ratio is poor, and a pilot pattern in class A is allocated as a pilot pattern for a data transmission block, and a pilot pattern in class B is allocated as a pilot pattern for a non-data transmission block.

The configuration of the base station in Fig. 10 is roughly the same as the base station of the third embodiment in Fig. 6, and differences are that a terminal information processing unit 27 extracts a data transmission block/non-data transmission block information from control information which is sent from the user terminal, and that a pilot pattern sequence number is decided based on the data transmission block/non-data transmission block.

The terminal information processing unit 27 extracts data transmission block/non-data transmission block information of the user terminal from the control information which is input, and inputs the information to a pilot pattern management unit 23. A ranking unit 23a of the pilot pattern management unit 23 ranks the user terminal based on the data transmission block/non-data transmission block information which is input. For example, class A is input to a pilot pattern allocation unit 23b if the input information is a data transmission block, and class B if it is a non-data transmission block. The pilot pattern allocation unit 23b, which received a class according to the data transmission block/non-data transmission block of the user terminal, refers to the same class in the pilot pattern management table as this class, determines a pilot pattern sequence number which is not in use in this class and has a better peak to average power ratio, and inputs this pilot pattern sequence number to a downlink signal base band processing unit 24, thereafter the pilot pattern sequence number is sent to the user terminal.

The user terminal demodulates the pilot pattern sequence number from the receive signal, and hereafter generates a pilot pattern having this pilot pattern sequence number.

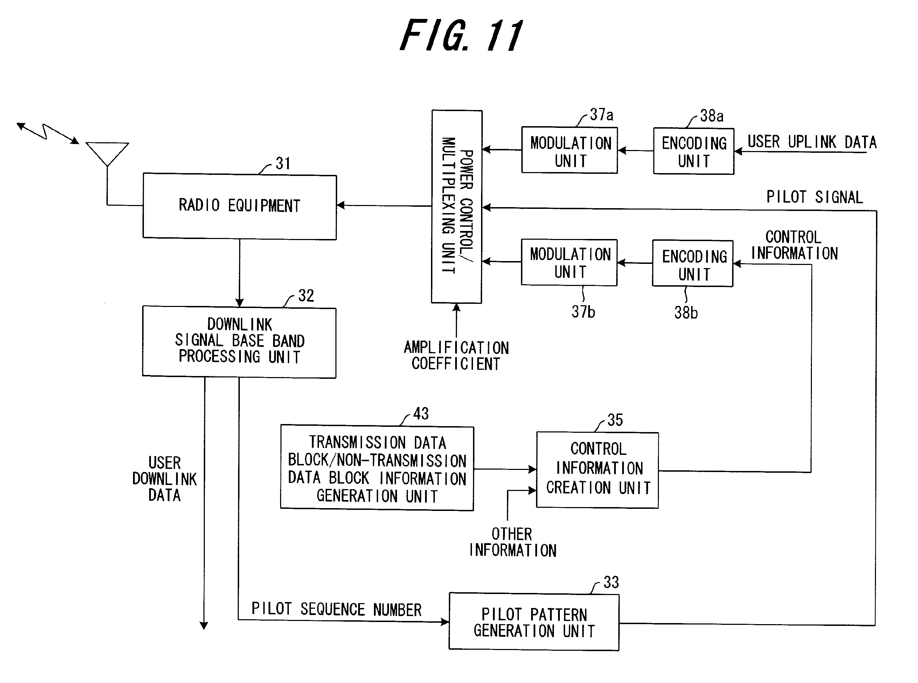

Fig. 11 is a block diagram of the user terminal in the second modified example, where the same components as those in the third embodiment of Fig. 7 are denoted with the same reference symbols. A difference is that a data transmission block/non-data transmission block information generation unit 43 is disposed, instead of the GPS receiver. A receiver of a radio equipment 31 converts a frequency of a receive signal from a radio frequency into a base band frequency, and inputs the base band signal to a downlink signal base band processing unit 32. The base band processing unit 32 demultiplexes the user data and the pilot pattern sequence number from the input signal, and a pilot pattern generation unit 33 generates a pilot signal based on the pilot pattern sequence number which is input.

The data transmission block/non-data transmission block information generation unit 43 generates data transmission block/non-data transmission block information, and a control information creation unit 35 creates control information including this information and other control information, and outputs this control information. Hereafter the user terminal operates in the same manner as the third embodiment, and notifies the data transmission block/non-data transmission block information to the base station.

If the class is changed by the change of the data transmission block/non-data transmission block information of the user terminal, the base station deletes the previous allocation of the pilot pattern, and controls so that the pilot pattern in the new class is allocated.

In the above description, a pilot pattern is allocated based on the data transmission block/non-data transmission block, but allocation may be determined according to the content of the uplink data. For example, the ranking unit 23a sets data for which real-time nature is required as class A, and data for which real-time nature is not required as class B, and the pilot pattern allocation unit 23b allocates a pilot pattern, with reference to the same class in the pilot pattern management table as the class of the data input from the ranking unit 23a.

Third modified example

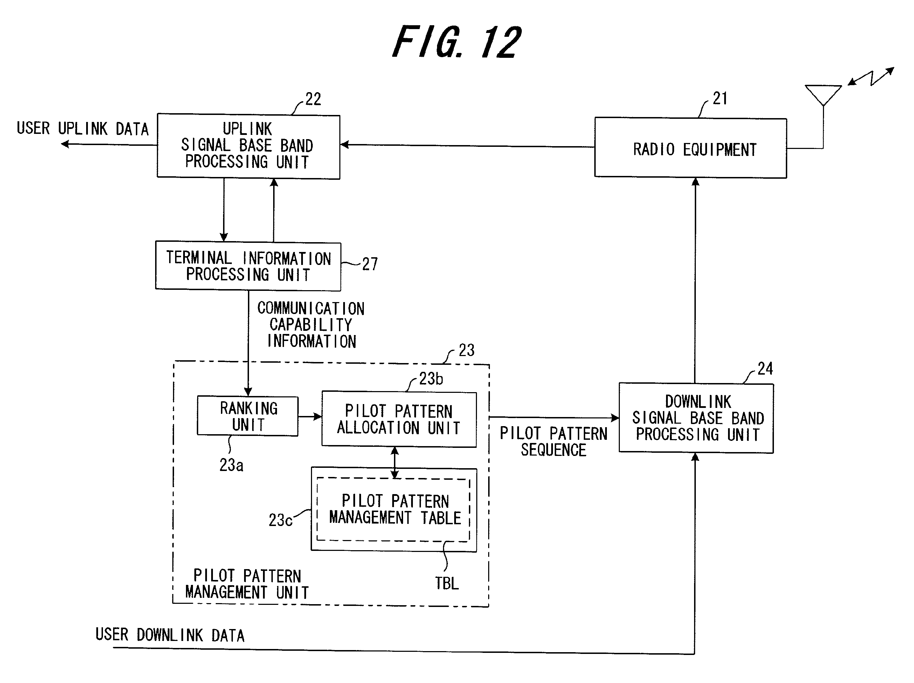

Fig. 12 is a block diagram of a base station according to a third modified example, where the same components as those in the base station of the third embodiment in Fig. 6 are denoted with the same reference symbols. In the third modified example, if the user terminal is classified based on the user equipment(UE) capability which is communication capability, such as transmission speed and quality of services (QoS) that can be provided, a pilot pattern is allocated to the user terminal using this classification.

When a connection is set, a terminal information processing unit 27 acquires the UE capability (communication capability) of the user terminal, and inputs it to a pilot pattern management unit 23. A ranking unit 23a of the pilot pattern management unit 23 determines a class of the user terminal based on the communication capability, and inputs this class to a pilot pattern allocation unit 23b. For example, the class of the user terminal is higher as the required quality of service (QoS) thereof is higher. The pilot pattern allocation unit 23b, which received the class of the user terminal, refers to the same class in a pilot pattern management table TBL as this class, determines a pilot pattern sequence number which is not in use and has a better peak to average power ratio, and inputs this pilot pattern sequence number to a downlink signal base band processing unit 24, thereafter the pilot pattern sequence number is sent to the user terminal.

The user terminal demodulates the pilot pattern sequence number of from the receive signal, and hereafter generates a pilot pattern having this sequence number.

According to this third modified example, a pilot with good peak to average power ratio is allocated to a user terminal of which service class is high and transmission power becomes high, as a result, the generation of distortion in the transmission amplifier of the user terminal can be prevented.

(D) Fourth embodiment

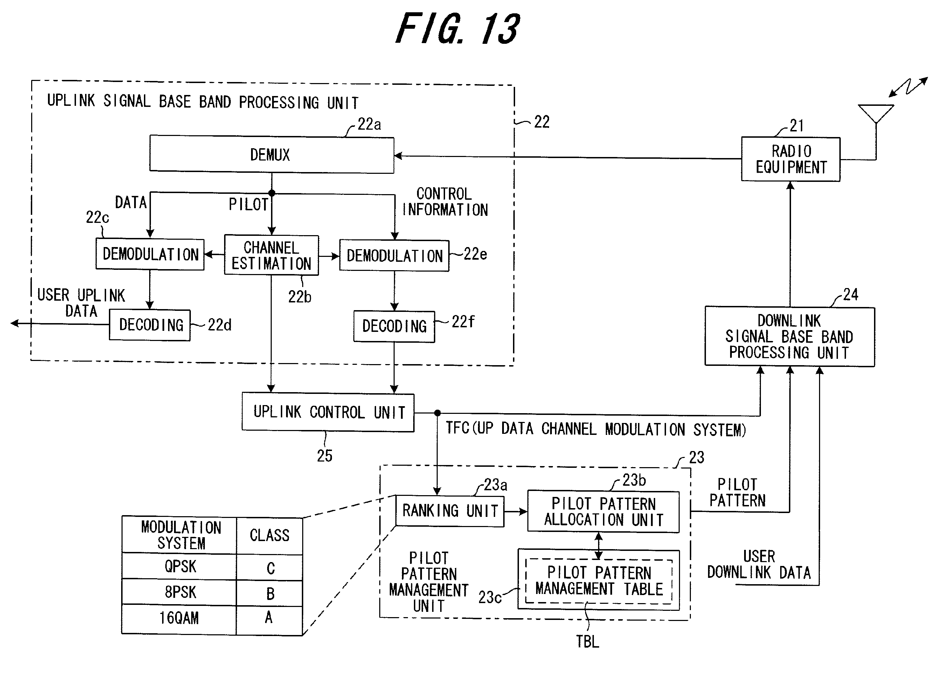

Fig. 13 is a block diagram of a base station according to a fourth embodiment, where the same elements as those in the second embodiment of Fig. 2 are denoted with the same reference symbols. In the fourth embodiment, a pilot pattern is decided based on the modulation system of the user terminal. As the transmission speed of the modulation system is higher, a higher transmission power is required. Therefore in the fourth embodiment, a pilot pattern having a good peak to average power ratio is allocated with priority to a user who is communicating with a modulation system of which transmission speed is high.

A receiver of a radio equipment 21 converts a frequency of a receive signal from a radio frequency into a base band frequency, and inputs the base band signal to an uplink signal base band processing unit 22. A demultiplexing unit 22a of the base band processing unit 22 demultiplexes a pilot, user data and control data from the input signal, a channel estimation unit 22b estimates a channel (transmission path characteristic) using the pilot signal and outputs a channel estimation value, a demodulation unit 22c performs channel compensation based on the channel estimation value, and then performs demodulation processing, and a decoding unit 22d performs error correction decoding processing, and outputs the user data. A demodulation unit 22e performs channel compensation based on the channel estimation value and then performs demodulation processing, and a decoding unit 22f performs error correction decoding processing, and outputs control information. This control information includes CQI and position information of the user terminal.

An uplink control unit 25 decides a modulation system and encoding ratio of the user terminal based on the channel estimation value and CQI, and creates a TFC (Transport Format Combination) including the decided modulation system and encoding ratio and inputs to a pilot pattern management unit 23 and a downlink signal base band processing unit 24.

A ranking unit 23a of the pilot pattern management unit 23 decides the ranking of the user terminal based on the modulation system included in the TFC. For example, the class of the user terminal whose modulation system is 16QAM is class A, the class of the user terminal whose modulation system is 8PSK is class B, and the class of the user terminal whose modulation system is QPSK is class C, and the decided class is input to a pilot pattern allocation unit 23b. A storage unit 23c has a pilot pattern management table TBL (see Fig. 4), where the pilot pattern sequence numbers k are classified into three classes A, B and C in order from better ranking. The pilot pattern allocation unit 23b, which received a class from the ranking unit 23a, refers to the same class in the pilot pattern management table TBL as this class, determines a pilot pattern sequence number which is not in use and has a better peak to average power ratio, and inputs this pilot pattern sequence number to the downlink signal base band processing unit 24.

The downlink signal base band processing unit 24 encodes user data, the pilot pattern sequence number, and TFC, then modulates and multiplexes these data, and inputs the multiplexed signal to a transmitter of the radio equipment 21. The transmitter converts a frequency of a base band signal into a radio frequency, and then amplifies the radio signal and sends this amplified radio signal to the user terminal.

According to the fourth embodiment, a pilot with good peak to average power ratio is allocated to a user terminal of which data transmission speed is high and transmission power is high, so the generation of distortion in the transmission amplifier can be prevented.

(E) Fifth embodiment

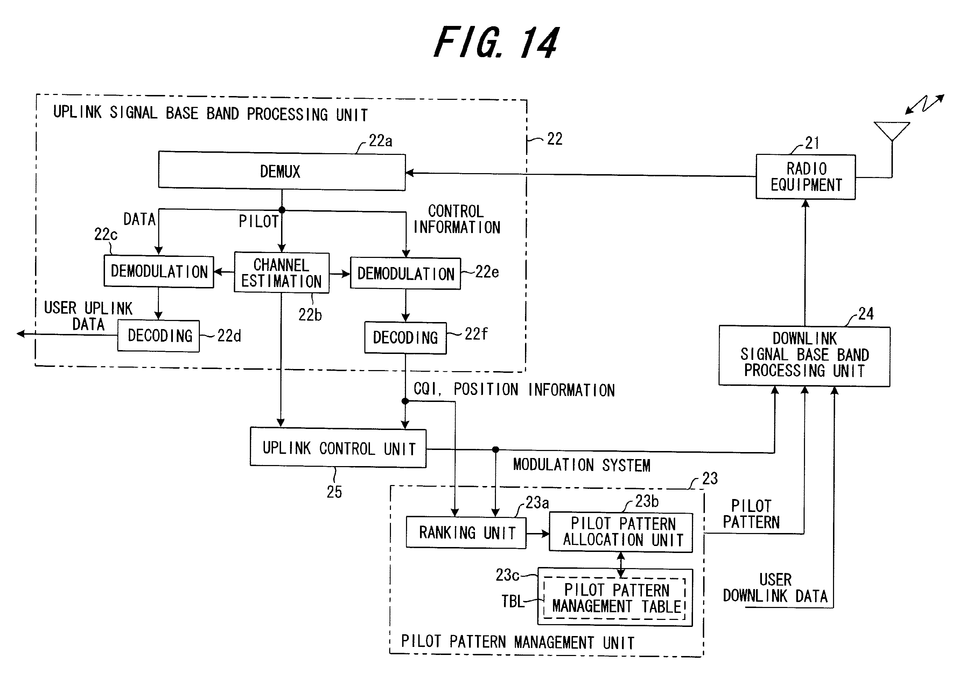

Fig. 14 is a block diagram of a base station according to a fifth embodiment, where the same elements as those in Fig. 13 are denoted with the same reference symbols.

The transmission power of a user terminal increases as the user terminal is more distant from the base station. In addition to that, the transmission power of a user terminal also changes depending on the propagation path conditions and modulation system, even if the distance from the base station is the same. Therefore in the fifth embodiment, a pilot pattern of the user terminal is decided based on the combination of the propagation path (e.g. CQI), a modulation system of the user terminal, and position information of the user terminal.

A receiver of a radio equipment 21 converts a frequency of a receive signal from a radio frequency into a base band frequency, and inputs the base band signal to an uplink signal base band processing unit 22. The base band processing unit 22 performs an operation similar to Fig. 13, and outputs user data, channel estimation value and control information. This control information includes a CQI and position information of the user terminal.

An uplink control unit 25 decides a modulation system and encoding ratio of the user terminal based on the channel estimation value and CQI, and creates a TFC (Transport Format Combination) including the modulation system and encoding ratio and inputs it to a pilot pattern management unit 23 and a downlink signal base band processing unit 24. A ranking unit 23a of the pilot pattern management unit 23 decides the ranking of the user terminal based on the combination of the CQI of the user terminal included in the control information, position information and modulation system included in the TFC. For example, it is assumed that normalized position information of the user terminal x is $\ell$ (x), propagation path information is p(x), and modulation information is m(x), and the ranking is decided using the following expression which comprehensively judges these information.

$$f(x) = \ell(x) * p(x) * m(x) \qquad (3)$$

In other words, if there are three classes A, B and C in order from large value of f(x) to small value of f(x), the ranking unit 23a calculates f(x) of the user terminal, decides a class to which this calculation result belongs, and inputs the class to a pilot pattern allocation unit 23b. The storage unit 23c has a pilot pattern management table TBL (see Fig. 4), where the pilot pattern sequence numbers k are classified into three classes A, B and C in order from a better ranking. The pilot pattern allocation unit 23b, which received a class of f(x) calculation result of the user terminal from the ranking unit 23a, refers to the same class in the pilot pattern management table TBL as this class, determines a pilot pattern sequence number which is not in use and has a better peak to average power ratio in this class, and inputs this pilot pattern sequence number to the downlink signal base band processing unit 24.

The downlink signal base band processing unit 24 encodes the user data, the pilot pattern , sequence number and the TFC, then modulates and multiplexes these data and inputs the multiplexed signal to a transmitter of the radio equipment 21. The transmitter converts a frequency of a base band signal to a radio frequency, and then amplifies the radio signal and sends the amplified radio signal to the user terminal.

According to the fifth embodiment, a pilot pattern is decided using a plurality of parameters, so a pilot with good peak to average power ratio is allocated to a user terminal of which transmission power is high with certainty, and the generation of distortion in the transmission amplifier can be prevented.

As the pilot pattern allocation method, the following two methods are also possible.

The first method is a method for considering a peak to average power ratio of the data portion. As the peak to average power ratio of the data portion decreases, the influence of the peak to average power ratio of the pilot portion on the entire transmission signal becomes relatively small. Therefore a pilot pattern with good peak to average power ratio is allocated with priority to a user having a good peak to average power ratio in the data portion.

The second method is a method for considering the purpose of use of a pilot signal. If pilot signals are used separately for the SIR estimation purpose and for the channel estimation purpose, a receive quality of a pilot for channel estimation is normally more critical than that for SIR estimation. Therefore, a pilot pattern with good peak to average power ratio is allocated to a pilot for channel estimation.

(F) Sixth embodiment

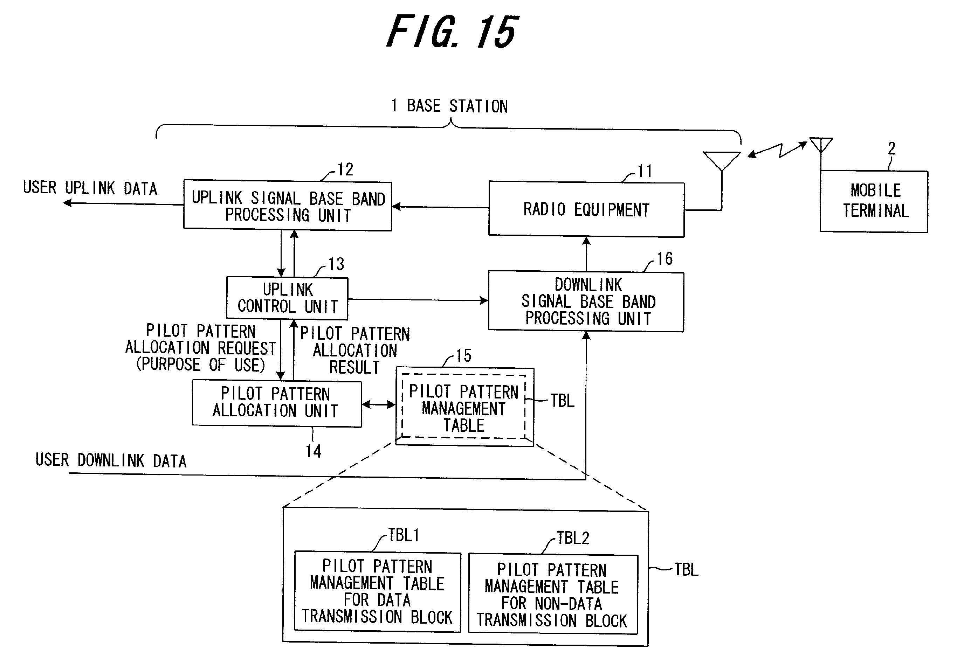

In the sixth embodiment, a base station allocates pilot patterns to user terminals for each purpose of use of the pilot, and the user terminal switches the predetermined pilot patterns depending on the purpose of use of the pilot. Fig. 15 is a block diagram of the base station according to a sixth embodiment, where the same components as those in Fig. 1 are denoted with the same reference symbols. In the following description, the purpose of use of pilots are classified into two, that is for a data transmission block and for a non-data transmission block, but other classifications are also possible. For example, the purpose of use of pilots could be classified into three, that is for channel estimation, for CQI measurement and for uplink synchronization.

A pilot pattern management table TBL stored in a storage unit 15 has a plurality of pilot pattern management tables (rank tables) depending on the intended use of the pilot. In other words, the pilot pattern management table TBL has a rank table TBL1 for a data transmission block, and a rank table TBL2 for a non-data transmission block. The rank tables TBL1 and TBL2 are created as follows, for example. In other words, pilot patterns are ranked sequentially from a better peak to average power ratio, and these pilot patterns are classified into a class of good peak to average power ratio and a class of bad peak to average power ratio, the rank table TBL1 is created as a class for a data transmission block, which is a high ranking class, and the rank table TBL2 is created as a class for a non-data transmission block, which is a low ranking class.

When a pilot pattern allocation request is received from an uplink control unit 13, a pilot pattern allocation unit 14 decides the pilot patterns according to each purpose of use, with reference to the rank tables TBL1 and TBL2 respectively, or adaptively decides the pilot patterns for each purpose of use considering the transmission power and the position information of the user terminal, and responds with the pilot pattern sequence numbers for each purpose of use to an uplink control unit 13. The uplink control unit 13 inputs the received pilot pattern sequence numbers for each purpose of use to a downlink signal base band processing unit 16.

The downlink signal base band processing unit 16 encodes user data and a pilot pattern sequence number for each purpose of use, then modulates and multiplexes these data, and inputs multiplexed signal to a transmitter of the radio equipment 11, and the transmitter sends this signal to the user terminal 2. The user terminal 2 demodulates the pilot pattern sequence number for each purpose of use from the receive signal, stores the pilot pattern sequence numbers and generates a pilot pattern according to the purpose of use.

In the above description, the rank table TBL1 is created for a data transmission block, using pilot patterns in a high ranking class, and the rank table TBL2 is created for a non-data transmission block, using pilot patterns in a low ranking class. However if the pilot for a data transmission block and the pilot for a non-data transmission block are orthogonally transmitted in a frequency domain or time domain, the rank tables TBL1 and TBL2 may be created so that the same pilot patterns are included each table respectively.

For deciding a pilot pattern for each purpose of use, the methods described in the first to fifth embodiments and each modified example can be used.

If pilots for a data transmission block are managed so as to be orthogonal in a frequency domain or time domain for all the user terminals existing in a same cell, a same pilot pattern for the data transmission block may be allocated to a plurality of user terminals. In this case, a different pilot pattern is allocated to each user terminal for the pilots for a non-data transmission block, using the methods in the first to fifth embodiments.

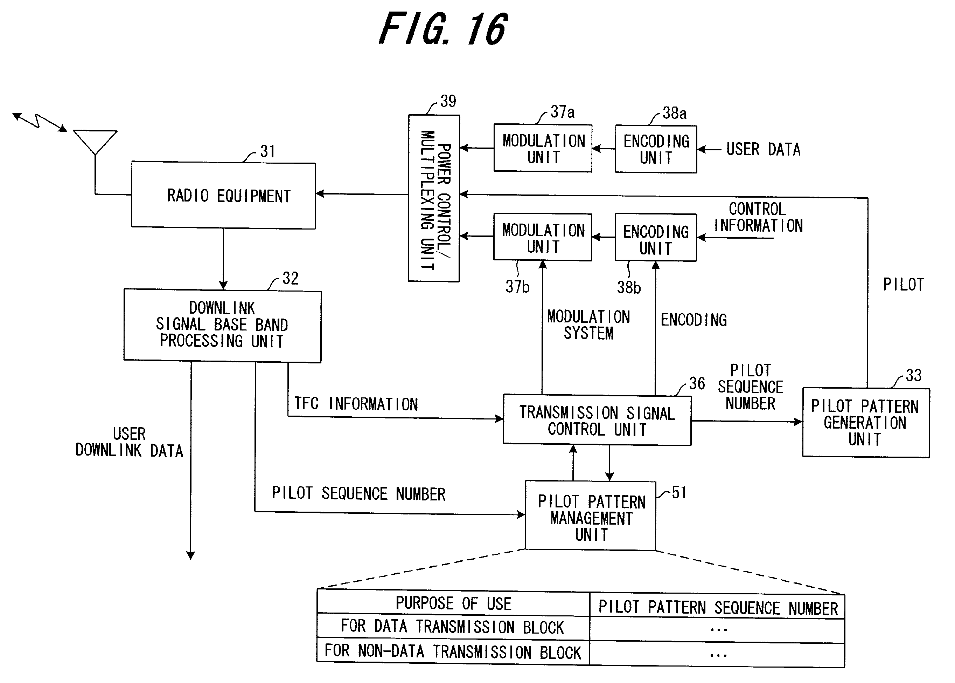

Fig. 16 is a block diagram of the user terminal of the sixth embodiment, where same components as those in the user terminal of the second embodiment in Fig. 5 are denoted with the same reference symbols.

A receiver of a radio equipment 31 converts a frequency of a receive signal from a radio frequency into a base band frequency, and inputs the base band signal to a downlink signal base band processing unit 32.

The base band processing unit 32 demultiplexes a user data, pilot pattern sequence number for each purpose of use, and TFC information. A pilot pattern management unit 51 receives the pilot pattern sequence number for each purpose of use, and distinguishes and stores the pilot pattern sequence number on the basis of whether it is for a data transmission block or for a non-data transmission block.

A transmission signal control unit 36 inputs a modulation system and encoding ratio included in the TFC information to modulation units 37a and 37b and encoding units 38a and 38b respectively. The transmission control unit 36 also decides the purpose of use of the pilot pattern based on the status (data transmission block, non-data transmission block) of the user terminal, requests a pilot pattern sequence number according to this purpose of use to the pilot pattern management unit 51, and inputs the pilot pattern sequence number received from this pilot pattern management unit 51 to a pilot pattern generation unit 33. The pilot pattern generation unit 33 generates a pilot signal based on the pilot pattern sequence number which is input.

The encoding units 38a and 38b encode the user data and control information using the encoding system and encoding ratio which are input, the modulation units 37a and 37b modulate the input data using the modulation system which is input, and a power control/multiplexing unit 39 performs a predetermined power control for the user data, control information and pilot signal, then multiplexes these data, and inputs the multiplexed data to a transmitter of the radio equipment 31. The transmitter converts a frequency of a base band signal into a radio frequency, then amplifies the radio signal and sends the amplified radio signal to the base station.

If a new allocation information on the pilot pattern is received, the pilot pattern management unit 51 updates the pilot patterns which are held. The update period may be different between a pilot pattern for a data transmission block and a pilot pattern for a non-data transmission block.

According to the sixth embodiment, a different pilot pattern can be allocated to the user terminal depending on each purpose of use.

(G) Seventh embodiment

In a mobile communication system, a different frequency is used for each cell during communication in order to suppress interference between cells. In the same way, the interference between cells can be decreased if different pilot patterns are allocated to the cells or sectors.

In order to transmit data efficiently, it is necessary to multiplex the pilot pattern having a CM, which is smaller than the CM of data, with data, and send the multiplexed data. In the case of a pilot sequence of GCL and CAZAC, the CM changes depending on the sequence number, and the number of pilot patterns having a small CM decreases as the sequence length decreases (see Fig. 30). For example, when data is modulated by $\pi/2$ - BPSK, the number of pilot patterns having a CM smaller than the CM of $\pi/2$ - BPSK is few. Therefore if only pilot patterns having a CM smaller than the CM of $\pi/2$ - BPSK are repeatedly used in each cell, a case of adjacent cells using a same pilot pattern is generated, where a sufficient effect to decrease interference between cells cannot be implemented.

As the modulation degree of the modulation system increases (e.g. QPSK, 16QAM), the number of pilot patterns which can be sent simultaneously with data increases (See Fig. 30), so a pilot pattern according to the modulation system can be used in each cell. If the number of pilot patterns to be used is adaptively changed for each modulation system, an greater interference reduction effect can be implemented.

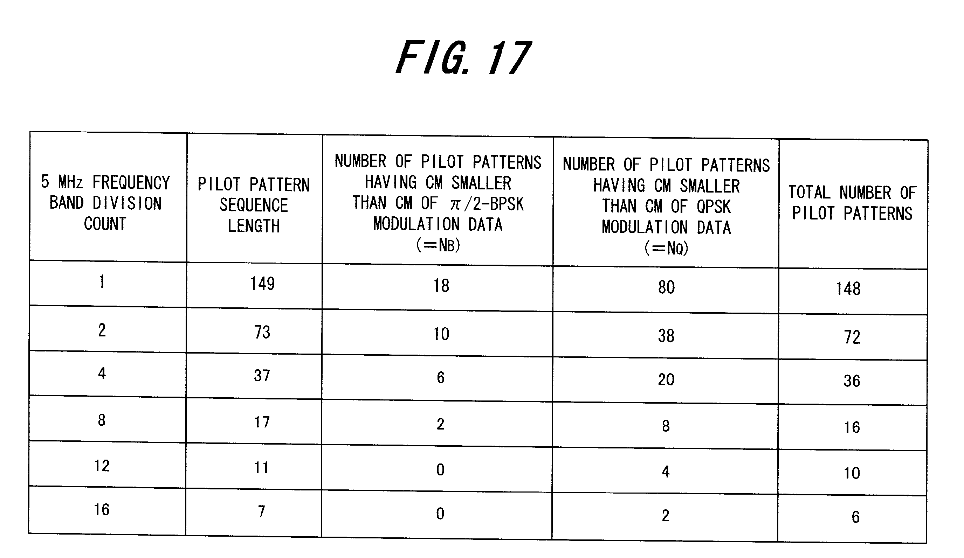

Fig. 17 is a table showing the number of available pilot patterns for each combination of number of frequency divisions and modulation system in a case where 5 MHz is used by being frequency divided by a plurality of user terminals. Since the total bandwidth is constant, the frequency bandwidth per user decreases and the length of a pilot pattern to be used (sequence length) decreases, as the number of divisions of the frequency increases. And as the pilot pattern length decreases, the number of patterns which can be used for data transmission for each modulation system decreases. For example, in the case of sequence length 17, the number of pilot patterns of GCL/CAZAC having a CM smaller than the CM of $\pi/2$ - BPSK decreases to 2, and a same pilot pattern must be allocated every two cells. On the other hand, the number of pilot patterns having a CM smaller than the CM of QPSK is 8, so in the case of QPSK, a same pilot pattern can be allocated at every eight cells.

The seventh embodiment makes much of the fact that the number of available pilot patterns changes depending on the modulation system, and is characterized in that both the number of pilot patterns to be repeatedly used and the pilot pattern are changed depending on the modulation system. According to the seventh embodiment, a pilot pattern to be used can be changed depending on the modulation system within a same cell, and also different pilot patterns can be allocated between adjacent cells or between adjacent sectors. If the sequence length is adaptively changed as shown in Fig. 17, then $N_B'(\leq N_B)$ number of pilot patterns having CM smaller than CM of BPSK modulation data and $N_Q'$ ($\leq N_Q - N_B'$) number of pilot patterns having CM smaller than CM of QPSK modulation data can be repeatedly used for each sequence length.

In the prior art, the pilot patterns and the number of pilot patterns are not changed depending on the modulation system, and in GCL/CAZAC, the number of pilot patterns that can be used for all modulation systems is insufficient. Therefore in the prior art, a same pilot pattern must be used even if the modulation systems are different within a same cell or sector, and different pilot patterns cannot be allocated in adjacent cells or adjacent sectors, therefore the interference reduction effect decreases.

· Base station

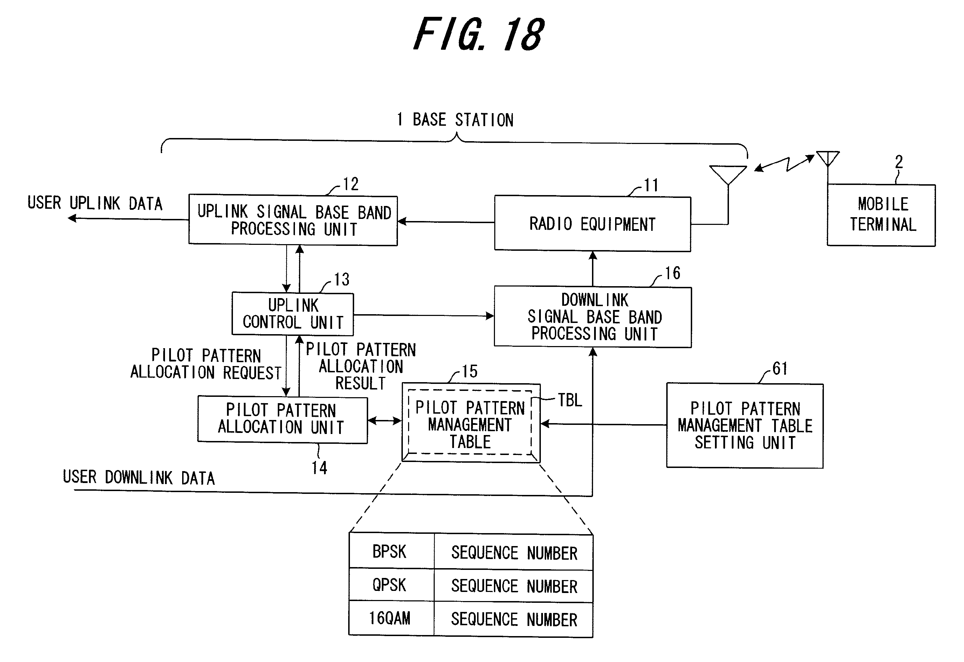

Fig. 18 is a block diagram of a base station according to the seventh embodiment, where the same components as those in Fig. 1 are denoted with the same reference symbols.

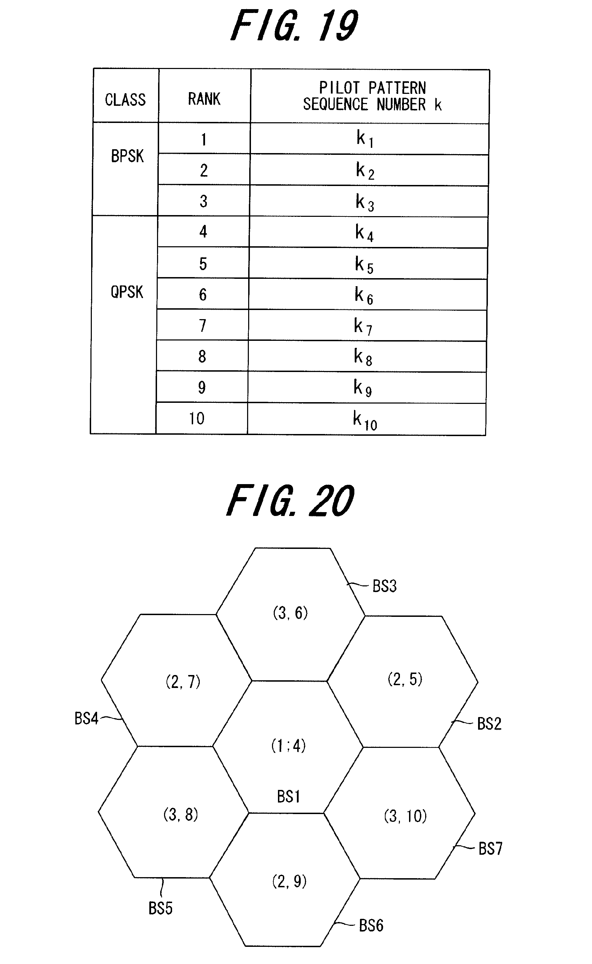

A pilot pattern management table setting unit 61 determines pilot patterns such that pilot patterns to be used are different between adjacent base stations or between adjacent sectors, and pilot patterns are different depending on each modulation system in a same base station or in a same sector, and stores the determined pilot patterns in a storage unit 15. For example, it is assumed as shown in Fig. 19 that when each pilot pattern (sequence number k) of a CAZAC sequence having a predetermined length is ranked based on the peak to average power ratio, the number of pilot patterns which can be used for a $\pi/2$ - BPSK modulation system is 3, and the pilot pattern sequence numbers thereof are $k_1$ to $k_3$, and the number of pilot patterns which can be used for a QPSK modulation system is 7 and the pilot pattern sequence numbers thereof are $k_4$ to $k_{10}$. In this case, pilot patterns shown by (m, n) are allocated to each cell BS1 to BS7 in the hexagonal cell layout shown in Fig. 20. m indicates allocating a pilot pattern in the mth rank as a pilot pattern for $\pi/2$ - BPSK, and n indicates allocating a pilot pattern in the nth rank as a pilot pattern for QPSK.

If pilot patterns are allocated to each cell, as shown in Fig. 20, pilot patterns used are different between the adjacent base stations, and pilot patterns in a same base station are different depending on the modulation system. Fig. 19 and Fig. 20 are cases when the modulation systems are assumed to be BPSK and QPSK, but 8QPSK and 16QPSK, for example, can also be considered.

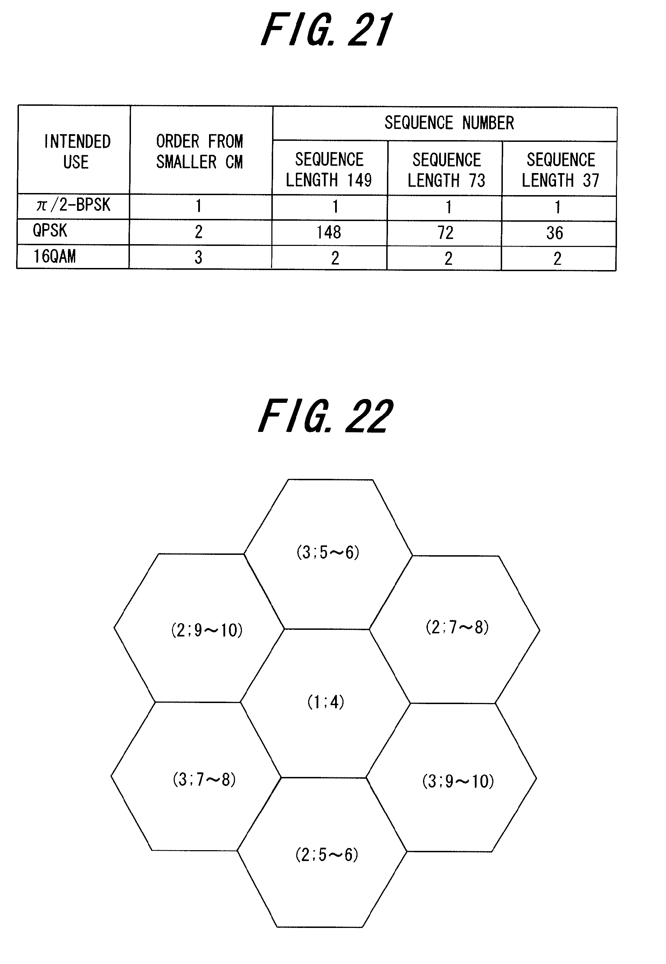

The pilot pattern management table setting unit 61 inputs a pilot pattern sequence number of each modulation system based on the pilot patterns (m, n) to be allocated to each base station, and the storage unit 15 creates and stores a pilot pattern management table TBL, in which each pilot pattern sequence is stored in connection with the modulation system. The above is the case where a pilot pattern sequence number of each modulation system is set and stored for one sequence length, but as Fig. 21 shows, a pilot pattern sequence number for each modulation system may be set for a plurality of sequence lengths. In this case, if the sequence length adaptively changes, the user terminal can use a pilot pattern according to the modulation system for each sequence length.

If a pilot pattern allocation request including modulation system and sequence length of the user terminal is received from an uplink control unit 13, a pilot pattern allocation unit 14 acquires a pilot pattern sequence number according to this sequence length and modulation system by referring to the table TBL (Fig. 21), and reports this pilot pattern sequence number to the uplink control unit 13. Thereby the uplink control unit 13 inputs the received sequence length and pilot pattern sequence number to a downlink signal base band processing unit 16. The downlink signal base band processing unit 16 encodes the user data, and sequence length and the pilot pattern sequence number, and sends the encoded data to a user terminal 2 via a radio equipment 11. The user terminal 2 demodulates the sequence length and the pilot pattern sequence number from the receive signal, generates a pilot pattern having this sequence length and sequence number, adds this pilot pattern to the user data, and sends then to the base station.

Fig. 20 is a case when one pilot pattern is allocated for each modulation system in each cell BS1 to BS7, but as Fig. 22 shows, one or more pilot patterns may be allocated for each modulation system. In Fig. 22, two pilot patterns are allocated for the QPSK in each cell.

· User terminal

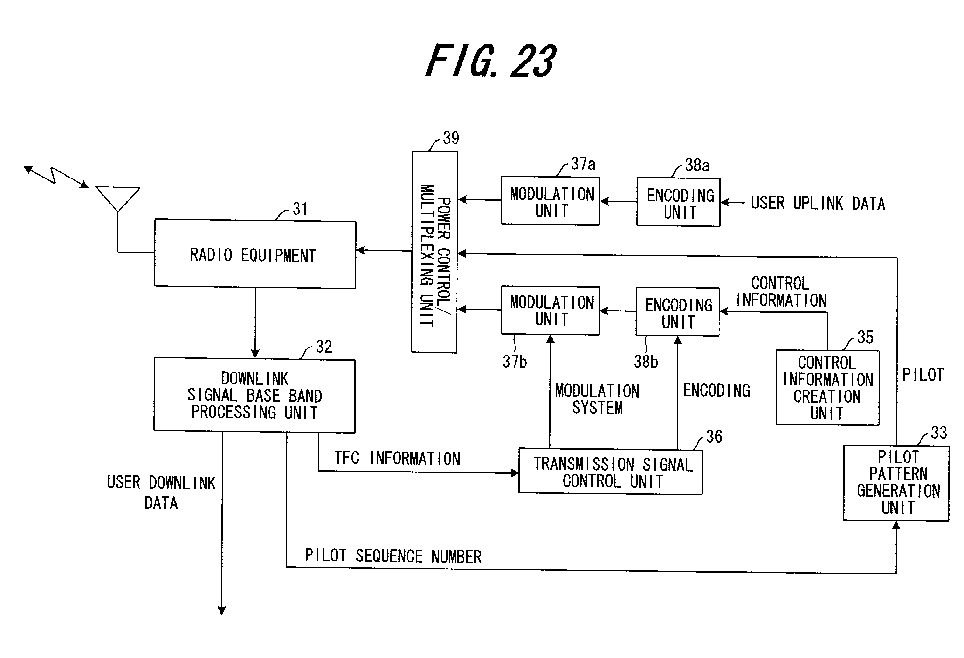

Fig. 23 is a block diagram of the user terminal in the seventh embodiment, where the same components as those in the user terminal of the second embodiment in Fig. 5 are denoted with the same reference symbols.

A receiver of a radio equipment 31 converts a frequency of a receive signal from a radio frequency into a base band frequency, and inputs the base band signal to a downlink signal base band processing unit 32.

The base band processing unit 32 demultiplexes a user data, pilot sequence length/sequence number, TFC information and the like from the input signal. A pilot pattern generation unit 33 generates a pilot signal based on the received pilot pattern sequence length/sequence number. A control information creation unit 35 creates and outputs control information, and a transmission signal control unit 36 inputs the modulation system and encoding ratio included in the TFC information to the modulation units 37a and 37b and encoding units 38a and 38b, respectively. The encoding units 38a and 38b encode the user data and control information using the encoding system and encoding ratio which are input, and the modulation units 37a and 37b modulate the input data using the modulation system which is input, and a power control/ multiplexing unit 39 performs a predetermined power control for the user data, control information and pilot signal, then multiplexes these data and inputs the multiplexed data to a transmitter of the radio equipment 31. The transmitter converts a frequency of a base band signal into a radio frequency, then amplifies the radio signal and sends this radio signal to the base station.

· Concrete pilot pattern setting example

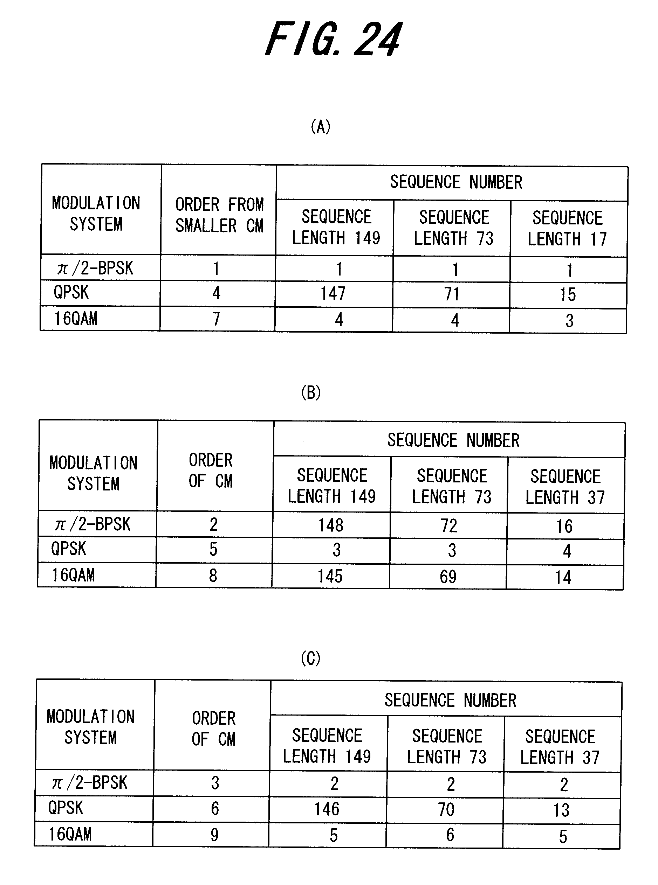

Fig. 24 shows concrete pilot pattern setting examples in three adjacent cells A, B and C in a case where the number of pilot patterns (number of repeats) that can be used in each modulation system is 3. (A) is an example of a pilot pattern management table set in cell A, (B) is in cell B, and (C) is in cell C, respectively. These are set such that pilot patterns used in adjacent cells are different, and pilot patterns in a same cell are different depending on the modulation system.

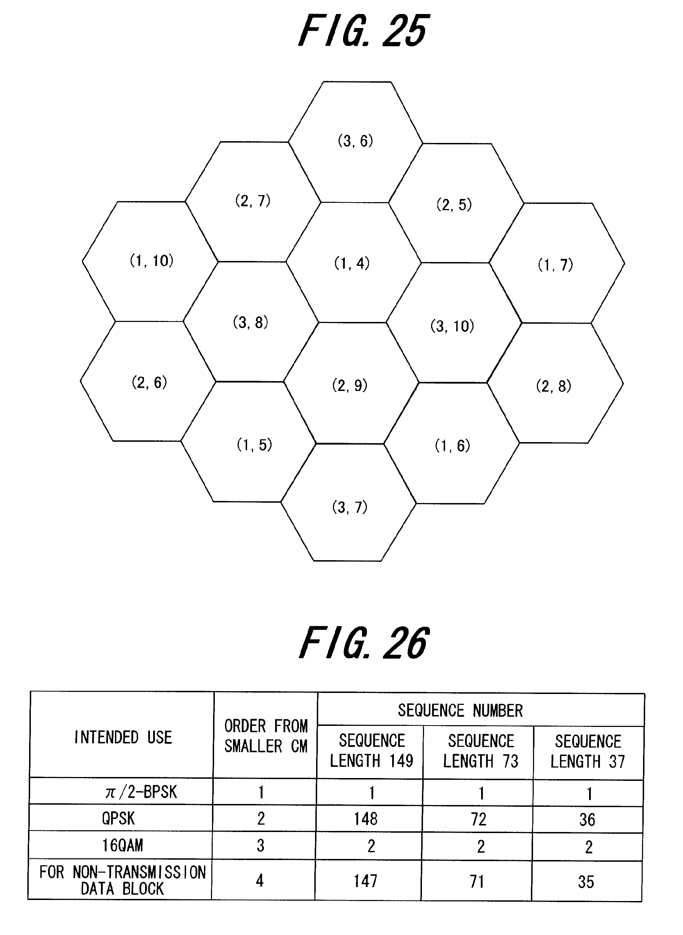

Fig. 25 is an example of pilot patterns allocated to each cell (base station) when the hexagonal cell layout in Fig. 20 is expanded.

· First modified example

In the above embodiment, the base station decides an appropriate pilot pattern each time, and notifies the decision to the user terminal, but the base station may collectively notify sequence numbers for a plurality of purpose of use (for a plurality of modulation systems) to the terminal. If only a pilot pattern management table for one sequence length exists in the storage unit 15, the pilot patterns can be notified to all the user terminals in the cell using the broadcast channel. If a plurality of sequence lengths exist, the pilot patterns can be collectively transmitted via a broadcast channel, or a table according to the sequence length used by a user terminal can be individually notified via a dedicated channel. If the base station sends pilot pattern sequence numbers for a plurality of modulation systems to a user terminal for each sequence length, the configuration of the user terminal is the same as Fig. 16, and the operation is as follows.

A receiver of the radio equipment 31 converts a frequency of a receive signal from a radio frequency into a base band frequency, and inputs the base band signal to the downlink signal base band processing unit 32. The base band processing unit 32 demultiplexes the user data, the pilot sequence number for each sequence length/modulation system, the TFC information, and the like from the input signal. The pilot pattern management unit 51 receives and stores the pilot pattern sequence number for each sequence length/modulation system. The transmission signal control unit 36 inputs a modulation system and encoding ratio included in the TFC information to the modulation units 37a and 37b and encoding units 38a and 38b, respectively. The transmission control unit 36 also adaptively decides the sequence length and modulation system used by the user terminal, requests a pilot pattern sequence number according to the sequence length and modulation system to the pilot pattern management unit 51, and inputs the pilot pattern sequence number received from this pilot pattern management unit 51 to the pilot pattern generation unit 33. The pilot pattern generation unit 33 generates a pilot signal based on the pilot pattern sequence number which is input. The encoding units 38a and 38b encode the user data and control information using the encoding system and encoding ratio which are input, the modulation units 37a and 37b modulate the input data using the modulation system which is input, and the power control/ multiplexing unit 39 performs a predetermined power control for the user data, control information and pilot signal, then multiplexes these data, and inputs the multiplexed data to the transmitter of the radio equipment 31. The transmitter converts a frequency of a base band signal into a radio frequency, then amplifies the radio signal and sends it to the base station.

· Second modified example

In the seventh embodiment, a pilot pattern is allocated to the user terminal based on the modulation system without distinguishing between a data transmission block and a non-data transmission block, but a pilot pattern for a non-data transmission block can also be set for each sequence length, and notified to the user terminal. In this case, a pilot pattern for a non-data transmission block is set so as to be different between adjacent cells or adjacent sectors. Fig. 26 is an example of a pilot pattern management table considering a pilot pattern for a non-data transmission block. The pilot pattern allocation unit 14 (Fig. 18), which received a pilot pattern allocation request including data to indicate the modulation system and sequence length of the user terminal from the uplink control unit 13, refers to the table TBL (Fig. 26), acquires (1) a first pilot pattern sequence number according to the sequence length and modulation system, and (2) a second pilot pattern for a non-data transmission block according to this sequence length, and inputs these acquired data to the uplink control unit 13. The uplink control unit 13 inputs the sequence lengths and sequence numbers of the received first and second pilot patterns to the downlink signal base band processing unit 16. The downlink signal base band processing unit 16 encodes the user data, and the sequence lengths and sequence numbers of the first and second pilot patterns, and sends them to the user terminal 2 from the radio equipment 11. The user terminal 2 demodulates and stores the sequence lengths and sequence numbers of the first and second pilot patterns from the receive signal, generates a predetermined pilot pattern according to the purpose of use (data transmission block/non-data transmission block), and sends it to the base station.
The following are three possible ways of deciding on a pilot for a non-data transmission block.

(1) In addition to classification based on a modulation system for a data transmission block, a class for a pilot for a non-data transmission block is added where an independent number of repeats is provided.
(2) A pilot pattern the same as one of the modulation systems is used.
(3) A pilot pattern used for a previous data transmission block is used.

Fig. 24 is a pilot pattern management table in the case of (1).
According to the seventh embodiment, pilot patterns to be used in a same cell can be different depending on each modulation system, and different pilot patterns can be allocated between adjacent cells or between adjacent sectors, and as a result, interference between cells or between sectors can be decreased.
A pilot pattern for a non-data transmission block and a pilot pattern for a data transmission block can also be different, and pilot patterns for a non-data transmission block can be set to be different between adjacent cells or adjacent sectors, hence interference between cells or between sectors can be reduced even more effectively.

Effect

According to the present invention, the generation of distortion in the transmission amplifier of the user terminal can be prevented even if the user terminal uses a sequence of which dispersion of the peak to average power ratio is large as a pilot pattern, and the reception quality in a base station can be improved. Also according to the present invention, the generation of distortion in a transmission amplifier can be prevented, even if the user terminal sends data at maximum transmission power or transmission power close thereto. Also according to the present invention, the generation of distortion can be prevented even if back off of the transmission amplifier is decreased, and as a result, the average power added efficiency can be improved, and duration of the battery of the user terminal can be increased. Also according to the present invention, interference between cells or between sectors can be decreased.

**Claims**

1.    A base station in a radio communication system which uses pilot signals having a predetermined pattern during transmission from a user terminal to the base station, the base station comprising:

a storage unit which stores a rank table on a peak to average power ratio of each pilot pattern;
a pilot pattern allocation unit which allocates pilot patterns to terminals in a sequence of better peak to average power ratio with reference to the rank table; and
a pilot pattern notification unit which notifies the allocated pilot pattern to the terminal.

**2.** A base station in a radio communication system which uses pilot signals having a predetermined pattern during transmission from a user terminal to the base station, comprising:

> a storage unit which stores a rank table on a peak to average power ratio of each pilot pattern;
> a transmission status identification unit which identifies transmission status of a user terminal;
> a pilot pattern allocation unit which adaptively allocates a pilot pattern having a rank according to the transmission status of the user terminal to the user terminal; and
> a pilot pattern notification unit which notifies the allocated pilot pattern to the terminal.

**3.** The base station according to Claim 2, wherein
the transmission status identification unit extracts a transmission power of the user terminal or a power difference between a maximum transmission power and the transmission power of the user terminal on the basis of a receive signal from the user terminal, and
the pilot pattern allocation unit allocates a pilot pattern having a good peak to average power ratio to a terminal of which transmission power is high or to a user terminal in which said power difference is small, with reference to the rank table.

**4.** The base station according to Claim 2, wherein
the transmission status identification unit extracts position information of a user terminal from a signal received from the user terminal, and calculates a distance between the user terminal and the base station using the position information, and
the pilot pattern allocation unit allocates a pilot pattern having a good peak to average power ratio to a user terminal which is far away from the base station, with reference to the rank table.

**5.** The base station according to Claim 2, wherein
the storage unit classifies the rank table of the pilot patterns and stores each class of the pilot patterns,
the transmission status identification unit identifies the communication capability of a user terminal, and
the pilot pattern allocation unit allocates a pilot pattern in a class according to the communication capability of the user terminal, to the user terminal.

**6.** The base station according to Claim 2, wherein
the storage unit classifies the rank table of the pilot patterns and stores each class of the pilot patterns,
the transmission status identification unit identifies a channel quality indicator CQI of a user terminal, and
the pilot pattern allocation unit allocates a pilot pattern in a class according to the CQI to the user terminal.

**7.** The base station according to Claim 2, wherein the storage unit classifies and stores the rank tables of the pilot patterns,
the transmission status identification unit calculates a function value of a function of which variables are a channel quality indicator CQI of a user terminal, a distance between the user terminal and the base station, and a modulation system of the user terminal, and
the pilot pattern allocation unit allocates a pilot pattern in a class according to the function value to the user terminal.

**8.** The base station according to Claim 2, wherein the storage unit classifies the rank table of the pilot patterns and stores each class of the pilot patterns,
the transmission status identification unit identifies real-time nature of user data which is sent by a user terminal, and
the pilot pattern allocation unit allocates a pilot pattern in a class according to the presence or absence of the real-time nature of the user data to the user terminal.

**9.** The base station according to Claim 2, wherein the storage unit classifies the rank table of the pilot patterns and stores each class of the pilot patterns,
the transmission status identification unit identifies a modulation system of user data, and
the pilot pattern allocation unit allocates a pilot pattern in a class according to the modulation system of the user data to the user terminal.

**10.** A radio communication system which uses pilot signals having a predetermined pattern during transmission from a user terminal to a base station, wherein the base station comprises:

> a storage unit which stores a rank table on a peak to average power ratio of each pilot pattern for each purpose of use;

a pilot pattern allocation unit which allocates the pilot pattern according to the intended use to the user terminal respectively, with reference to the rank table; and

a pilot pattern notification unit which notifies the pilot patterns according to the purposes of use to the user terminal respectively, and

the user terminal comprises:

a storage unit which stores the pilot patterns according to the purposes of use respectively;

a pilot generation unit which generates a pilot pattern according to the purpose of use; and

a transmission unit which sends the pilot pattern.

11. The radio communication system according to Claim 10, wherein the purposes of use are classified into a purpose of use for a data transmission block and another purpose of use for a non-data transmission block.

12. The radio communication system according to Claim 10, wherein the pilot pattern allocation unit adaptively allocates a pilot pattern for the data transmission block to the user terminal based on the rank table for the data transmission block.

13. The radio communication system according to Claim 10, wherein the pilot pattern allocation unit adaptively allocates a pilot pattern for the non-data transmission block to the user terminal based on the rank table for the non-data transmission block.

14. The base station according to Claim 1 to Claim 9, wherein the pilot pattern is a CAZAC sequence or GCL sequence.

15. A method of deciding a pilot pattern for pilot signals in a radio communication system which uses the pilot signals during transmission from a user terminal to a base station, the method comprising the steps of:

creating and storing a rank table on a peak to average power ratio of each pilot pattern;
allocating the pilot patterns to terminals in the sequence of better peak to average power ratio, with reference to the rank table; and
notifying the allocated pilot pattern to the terminal.

16. A method of deciding a pilot pattern for pilot signals in a radio communication system which uses the pilot signals during transmission from a user terminal to a base station, the method comprising the steps of:

creating a rank table on a peak to average power ratio of each pilot pattern;
identifying data transmission status of a user terminal; and
adaptively allocating a pilot pattern in a rank according to the data transmission status of the user terminal, to the user terminal.

17. The method according to Claim 16, wherein
the step of identifying data transmission status includes a step of extracting a transmission power of the user terminal or a power difference between a maximum transmission power and the transmission power of the user terminal on the basis of a receive signal from the user terminal, and
the step of allocating a pilot pattern includes a step of allocating a pilot pattern having a good peak to average power ratio to a user terminal of which transmission power is high or to a user terminal in which said power difference is small, with reference to the rank table.

18. The method according to Claim 16, wherein
the step of identifying data transmission status includes steps of extracting position information of a user terminal from a receive signal from the user terminal, and calculating a distance between the user terminal and the base station is calculated using the position information, and
the step of allocating a pilot pattern includes a step of allocating, a pilot pattern having a good peak to average power ratio to a user terminal which is far away from the base station, with reference to the rank table.

19. The method according to Claim 16, wherein
the step of creating a rank table includes classifying the rank table of the pilot patterns and storing each class of the pilot patterns,
the step of identifying data transmission status, includes identifying whether the user terminal is in a status of data transmission or in a status of non-data transmission, and

the step of allocating a pilot pattern includes allocating, a pilot pattern in a class according to the data transmission block to a user terminal if it is in the status of data transmission, and allocating a pilot pattern in another class according to the non-data transmission block to the user terminal if it is in the status of non-data transmission.

20. The method according to Claim 16, wherein

the step of creating a rank table includes classifying, the rank table of the pilot patterns and storing each class of the pilot patterns,

the step of identifying data transmission status includes identifying a communication capability of the user terminal, and

the step of allocating a pilot pattern includes allocating a pilot pattern in a class according to the communication capability of the user terminal to the user terminal.

21. The method according to Claim 16, wherein

the step of creating a rank table includes classifying the rank table of the pilot patterns and storing each class of the pilot patterns,

the step of identifying data transmission status includes identifying, a channel quality indicator CQI of the user terminal, and

the step of allocating a pilot pattern includes allocating a pilot pattern in a class according to the CQI to the user terminal.

22. The method according to Claim 16, wherein

the step of creating a rank table includes classifying, the rank table of the pilot patterns and storing each class of the pilot patterns,

the step of identifying data transmission status includes calculating a function value of a function of which variables are a channel quality indicator CQI of a user terminal, a distance between the user terminal and the base station, and a modulation system of the user terminal, and

the step of allocating a pilot pattern includes allocating a pilot pattern in a class according to the function value to the user terminal.

23. The method according to Claim 16, wherein

the step of creating a rank table includes classifying, the rank table of the pilot patterns and storing each class of the pilot patterns,

the step of identifying data transmission status includes identifying, real-time nature of user data which is sent by a user terminal, and

the step of allocating a pilot pattern includes allocating a pilot pattern in a class according to the presence or absence of the real-time nature of the user data to the user terminal.

24. The method according to Claim 16, wherein

the step of creating a rank table includes classifying the rank table of the pilot patterns and storing each class of the pilot patterns,

the step of identifying data transmission status includes identifying a modulation system of a user terminal, and

the step of allocating a pilot pattern includes allocating a pilot pattern in a class according to the modulation system of the user data to the user terminal.

25. A base station in a radio communication system which uses pilot signals having a predetermined pattern during transmission from a user terminal to the base station, the base station comprising:

a storage unit which stores pilot patterns which are set so that pilot patterns to be used are different between adjacent base stations or between adjacent sectors, and pilot patterns in a same base station or in a same sector are different depending on the purpose of use;

a pilot pattern allocation unit which allocates a pilot pattern according to the purpose of use of a user terminal, to the user terminal, with reference to a correspondence of the purpose of use and the pilot; and

a pilot pattern notification unit which notifies the allocated pilot pattern according to the purpose of use to the user terminal.

26. The base station in a radio communication system according to Claim 25, wherein the purpose of use is a modulation system, and the pilot patterns are set so that pilot patterns in a same base station or in a same sector are different depending on the modulation system.

27. The base station in a radio communication system according to Claim 26, wherein a pilot pattern is set for each of data transmission block and non-data transmission block, and for each modulation system, and the pilot pattern allocation unit allocates a pilot pattern to a user terminal on the basis of whether the block is a data transmission block or a non-data transmission block.

28. The base station in a radio communication system according to Claim 26, wherein a number of pilot patterns to be used for the allocation is changed and set for each modulation system in a base station.

# FIG. 1

1 BASE STATION

USER UPLINK DATA ← | UPLINK SIGNAL BASE BAND PROCESSING UNIT | ~12

| RADIO EQUIPMENT | ~11

| MOBILE TERMINAL | 2

| UPLINK CONTROL UNIT | ~13    PILOT PATTERN →    | DOWNLINK SIGNAL BASE BAND PROCESSING UNIT | ~16

PRQ | PAL 14

| PILOT PATTERN ALLOCATION UNIT |    ↔    | PILOT PATTERN MANAGEMENT TABLE | ~15    TBL

USER DOWNLINK DATA

| RANK | PILOT PATTERN SEQUENCE NUMBER k | IN USE | USER TERMINAL |
|------|----------------------------------|--------|---------------|
| 1 | 1 | YES | |
| 2 | N | YES | |
| 3 | 2 | NO | |
| : | : | : | : |
| M | 51 | NO | |

EP 1 991 016 A1

FIG. 2

# FIG. 3

| PILOT | CONTROL INFORMATION | DATA | CRC |
|-------|---------------------|------|-----|

PL     CNT     DT

# FIG. 4

| CLASS | RANK | PILOT PATTERN SEQUENCE NUMBER k | "IN USE" INFORMATION | USER TERMINAL |
|-------|------|----------------------------------|----------------------|---------------|
| A | 1 | 1 | YES | |
| | 2 | 127 | NO | |
| | : | : | | |
| | M1 | 25 | NO | |
| B | 1(M1+1) | 109 | YES | |
| | 2(M1+2) | 17 | NO | |
| | : | | | |
| | M2(M1+M2) | 89 | NO | |
| C | 1(M1+M2+1) | 63 | NO | |
| | 2(M1+M2+2) | 43 | NO | |
| | : | | | |
| | M3 (M1+M2+M3) | 77 | NO | |

# FIG. 5

RADIO EQUIPMENT 31

POWER CONTROL/MULTIPLEXING UNIT 39

MODULATION UNIT 37a

ENCODING UNIT 38a

USER UPLINK DATA

PILOT SIGNAL

CONTROL INFORMATION

MODULATION UNIT 37b

ENCODING UNIT 38b

DOWNLINK SIGNAL BASE BAND PROCESSING UNIT 32

AMPLITUDE COEFFICIENT

MODULATION SYSTEM

ENCODING

TFC INFORMATION

TRANSMISSION SIGNAL CONTROL UNIT 36

USER DOWNLINK DATA

POWER CONTROL INFORMATION

TRANSMISSION POWER DECISION UNIT 34

TRANSMISSION POWER INFORMATION

OTHER INFORMATION

CONTROL INFORMATION CREATION UNIT 35

PILOT SEQUENCE NUMBER

PILOT PATTERN GENERATION UNIT 33

EP 1 991 016 A1

# FIG. 6

USER UPLINK DATA ← UPLINK SIGNAL BASE BAND PROCESSING UNIT (22)

RADIO EQUIPMENT (21)

TERMINAL INFORMATION PROCESSING UNIT (27)

POSITION INFORMATION

PILOT PATTERN MANAGEMENT UNIT (23)

RANKING UNIT (23a)

PILOT PATTERN ALLOCATION UNIT (23b)

PILOT PATTERN MANAGEMENT TABLE (23c) (TBL)

PILOT PATTERN SEQUENCE

DOWNLINK SIGNAL BASE BAND PROCESSING UNIT (24)

USER DOWNLINK DATA

EP 1 991 016 A1

# FIG. 7

EP 1 991 016 A1

# FIG. 8

USER UPLINK DATA ← | UPLINK SIGNAL BASE BAND PROCESSING UNIT | 22

RADIO EQUIPMENT | 21

TERMINAL INFORMATION PROCESSING UNIT | 27

CQI

23

RANKING UNIT | 23a

PILOT PATTERN ALLOCATION UNIT | 23b

PILOT PATTERN MANAGEMENT TABLE | 23c

PILOT PATTERN SEQUENCE

DOWNLINK SIGNAL BASE BAND PROCESSING UNIT | 24

PILOT PATTERN MANAGEMENT UNIT

TBL

USER DOWNLINK DATA

EP 1 991 016 A1

# FIG. 9

EP 1 991 016 A1

# FIG. 10

| CLASS | RANK | PILOT PATTERN SEQUENCE NUMBER k | "IN USE" INFORMATION | USER TERMINAL |
|-------|------|--------------------------------|---------------------|---------------|
| A | 1 | 1 | YES | |
| | 2 | 127 | NO | |
| | : | : | | |
| | M1 | 25 | NO | |
| B | 1(M1+1) | 109 | YES | |
| | 2(M1+2) | 17 | NO | |
| | : | : | | |
| | M2(M1+M2) | 77 | NO | |

EP 1 991 016 A1

# FIG. 11

EP 1 991 016 A1

FIG. 12

# FIG. 13

**UPLINK SIGNAL BASE BAND PROCESSING UNIT** ~22

- DEMUX ~22a
- DATA | PILOT | CONTROL INFORMATION
- 22c DEMODULATION | CHANNEL ESTIMATION 22b | DEMODULATION ~22e
- USER UPLINK DATA | DECODING ~22d | DECODING ~22f

RADIO EQUIPMENT ~21

DOWNLINK SIGNAL BASE BAND PROCESSING UNIT ~24

UPLINK CONTROL UNIT ~25

TFC (UP DATA CHANNEL MODULATION SYSTEM)

PILOT PATTERN

USER DOWNLINK DATA

~23

PILOT PATTERN MANAGEMENT UNIT

RANKING UNIT ~23a → PILOT PATTERN ALLOCATION UNIT ~23b

PILOT PATTERN MANAGEMENT TABLE 23c

TBL

| MODULATION SYSTEM | CLASS |
|---|---|
| QPSK | C |
| 8PSK | B |
| 16QAM | A |

EP 1 991 016 A1

# FIG. 14

UPLINK SIGNAL BASE BAND PROCESSING UNIT ~22

DEMUX ~22a

RADIO EQUIPMENT ~21

DATA   PILOT   CONTROL INFORMATION

22c

DEMODULATION   CHANNEL ESTIMATION ~22b   DEMODULATION ~22e

USER UPLINK DATA

DECODING ~22d   DECODING ~22f

CQI, POSITION INFORMATION

DOWNLINK SIGNAL BASE BAND PROCESSING UNIT ~24

UPLINK CONTROL UNIT   25

MODULATION SYSTEM

~23

RANKING UNIT ~23a   PILOT PATTERN ALLOCATION UNIT ~23b   PILOT PATTERN

23c~   PILOT PATTERN MANAGEMENT TABLE

TBL~

USER DOWNLINK DATA

PILOT PATTERN MANAGEMENT UNIT

EP 1 991 016 A1

# FIG. 15

1 BASE STATION

USER UPLINK DATA ← UPLINK SIGNAL BASE BAND PROCESSING UNIT /12

RADIO EQUIPMENT /11

MOBILE TERMINAL 2

UPLINK CONTROL UNIT /13

DOWNLINK SIGNAL BASE BAND PROCESSING UNIT /16

PILOT PATTERN ALLOCATION REQUEST (PURPOSE OF USE)

PILOT PATTERN ALLOCATION RESULT

PILOT PATTERN MANAGEMENT TABLE /15 ―TBL

PILOT PATTERN ALLOCATION UNIT

14

USER DOWNLINK DATA

TBL1
PILOT PATTERN MANAGEMENT TABLE FOR DATA TRANSMISSION BLOCK

TBL2
PILOT PATTERN MANAGEMENT TABLE FOR NON-DATA TRANSMISSION BLOCK

―TBL

EP 1 991 016 A1

# FIG. 16

| PURPOSE OF USE | PILOT PATTERN SEQUENCE NUMBER |
|---|---|
| FOR DATA TRANSMISSION BLOCK | ... |
| FOR NON-DATA TRANSMISSION BLOCK | ... |

# FIG. 17

| 5 MHz FREQUENCY BAND DIVISION COUNT | PILOT PATTERN SEQUENCE LENGTH | NUMBER OF PILOT PATTERNS HAVING CM SMALLER THAN CM OF $\pi/2$-BPSK MODULATION DATA ($=N_B$) | NUMBER OF PILOT PATTERNS HAVING CM SMALLER THAN CM OF QPSK MODULATION DATA ($=N_Q$) | TOTAL NUMBER OF PILOT PATTERNS |
|---|---|---|---|---|
| 1 | 149 | 18 | 80 | 148 |
| 2 | 73 | 10 | 38 | 72 |
| 4 | 37 | 6 | 20 | 36 |
| 8 | 17 | 2 | 8 | 16 |
| 12 | 11 | 0 | 4 | 10 |
| 16 | 7 | 0 | 2 | 6 |

EP 1 991 016 A1

# FIG. 18

1 BASE STATION

USER UPLINK DATA ← UPLINK SIGNAL BASE BAND PROCESSING UNIT (12)

RADIO EQUIPMENT (11)

MOBILE TERMINAL (2)

UPLINK CONTROL UNIT (13)

DOWNLINK SIGNAL BASE BAND PROCESSING UNIT (16)

PILOT PATTERN ALLOCATION REQUEST

PILOT PATTERN ALLOCATION RESULT

PILOT PATTERN ALLOCATION UNIT (14)

PILOT PATTERN MANAGEMENT TABLE (15) — TBL

PILOT PATTERN MANAGEMENT TABLE SETTING UNIT (61)

USER DOWNLINK DATA

| BPSK | SEQUENCE NUMBER |
|------|-----------------|
| QPSK | SEQUENCE NUMBER |
| 16QAM | SEQUENCE NUMBER |

EP 1 991 016 A1

# FIG. 19

| CLASS | RANK | PILOT PATTERN SEQUENCE NUMBER k |
|-------|------|--------------------------------|
| BPSK | 1 | $k_1$ |
| | 2 | $k_2$ |
| | 3 | $k_3$ |
| QPSK | 4 | $k_4$ |
| | 5 | $k_5$ |
| | 6 | $k_6$ |
| | 7 | $k_7$ |
| | 8 | $k_8$ |
| | 9 | $k_9$ |
| | 10 | $k_{10}$ |

# FIG. 20

# FIG. 21

| INTENDED USE | ORDER FROM SMALLER CM | SEQUENCE NUMBER | | |
|---|---|---|---|---|
| | | SEQUENCE LENGTH 149 | SEQUENCE LENGTH 73 | SEQUENCE LENGTH 37 |
| $\pi/2$-BPSK | 1 | 1 | 1 | 1 |
| QPSK | 2 | 148 | 72 | 36 |
| 16QAM | 3 | 2 | 2 | 2 |

# FIG. 22

(3;5~6)

(2;9~10)

(2;7~8)

(1;4)

(3;7~8)

(3;9~10)

(2;5~6)

# FIG. 23

EP 1 991 016 A1

# FIG. 24

(A)

| MODULATION SYSTEM | ORDER FROM SMALLER CM | SEQUENCE NUMBER | | |
|---|---|---|---|---|
| | | SEQUENCE LENGTH 149 | SEQUENCE LENGTH 73 | SEQUENCE LENGTH 17 |
| $\pi/2$-BPSK | 1 | 1 | 1 | 1 |
| QPSK | 4 | 147 | 71 | 15 |
| 16QAM | 7 | 4 | 4 | 3 |

(B)

| MODULATION SYSTEM | ORDER OF CM | SEQUENCE NUMBER | | |
|---|---|---|---|---|
| | | SEQUENCE LENGTH 149 | SEQUENCE LENGTH 73 | SEQUENCE LENGTH 37 |
| $\pi/2$-BPSK | 2 | 148 | 72 | 16 |
| QPSK | 5 | 3 | 3 | 4 |
| 16QAM | 8 | 145 | 69 | 14 |

(C)

| MODULATION SYSTEM | ORDER OF CM | SEQUENCE NUMBER | | |
|---|---|---|---|---|
| | | SEQUENCE LENGTH 149 | SEQUENCE LENGTH 73 | SEQUENCE LENGTH 37 |
| $\pi/2$-BPSK | 3 | 2 | 2 | 2 |
| QPSK | 6 | 146 | 70 | 13 |
| 16QAM | 9 | 5 | 6 | 5 |

## FIG. 25

## FIG. 26

| INTENDED USE | ORDER FROM SMALLER CM | SEQUENCE NUMBER | | |
|---|---|---|---|---|
| | | SEQUENCE LENGTH 149 | SEQUENCE LENGTH 73 | SEQUENCE LENGTH 37 |
| $\pi/2$-BPSK | 1 | 1 | 1 | 1 |
| QPSK | 2 | 148 | 72 | 36 |
| 16QAM | 3 | 2 | 2 | 2 |
| FOR NON-TRANSMISSION DATA BLOCK | 4 | 147 | 71 | 35 |

# FIG. 27

DPDCH

| Data |
| --- |

$T_{slot}=2560$ chips

DPCCH

| Pilot | TFCI | FBI | TPC |
| --- | --- | --- | --- |

$T_{slot}=2560$ chips, 10bits

| Slot #0 | Slot #1 | | Slot #i | | Slot #14 |
| --- | --- | --- | --- | --- | --- |

1 radio frame : $T_f=10$ms

# FIG. 28

(A)

| Bit # | $N_{pilot}=3$ | | | $N_{pilot}=4$ | | | | $N_{pilot}=5$ | | | | | $N_{pilot}=6$ | | | | | |
|---|---|---|---|---|---|---|---|---|---|---|---|---|---|---|---|---|---|---|
| | 0 | 1 | 2 | 0 | 1 | 2 | 3 | 0 | 1 | 2 | 3 | 4 | 0 | 1 | 2 | 3 | 4 | 5 |
| Slot #0 | 1 | 1 | 1 | 1 | 1 | 1 | 1 | 1 | 1 | 1 | 1 | 0 | 1 | 1 | 1 | 1 | 1 | 0 |
| 1 | 0 | 0 | 1 | 1 | 0 | 0 | 1 | 0 | 0 | 1 | 1 | 0 | 1 | 0 | 0 | 1 | 1 | 0 |
| 2 | 0 | 1 | 1 | 1 | 0 | 1 | 1 | 0 | 1 | 1 | 0 | 1 | 1 | 0 | 1 | 1 | 0 | 1 |
| 3 | 0 | 0 | 1 | 1 | 0 | 0 | 1 | 0 | 0 | 1 | 0 | 0 | 1 | 0 | 0 | 1 | 0 | 0 |
| 4 | 1 | 0 | 1 | 1 | 1 | 0 | 1 | 1 | 0 | 1 | 0 | 1 | 1 | 1 | 0 | 1 | 0 | 1 |
| 5 | 1 | 1 | 1 | 1 | 1 | 1 | 1 | 1 | 1 | 1 | 1 | 0 | 1 | 1 | 1 | 1 | 1 | 0 |
| 6 | 1 | 1 | 1 | 1 | 1 | 1 | 1 | 1 | 1 | 1 | 0 | 0 | 1 | 1 | 1 | 1 | 0 | 0 |
| 7 | 1 | 0 | 1 | 1 | 1 | 0 | 1 | 1 | 0 | 1 | 0 | 0 | 1 | 1 | 0 | 1 | 0 | 0 |
| 8 | 0 | 1 | 1 | 1 | 0 | 1 | 1 | 0 | 1 | 1 | 1 | 0 | 1 | 0 | 1 | 1 | 1 | 0 |
| 9 | 1 | 1 | 1 | 1 | 1 | 1 | 1 | 1 | 1 | 1 | 1 | 1 | 1 | 1 | 1 | 1 | 1 | 1 |
| 10 | 0 | 1 | 1 | 1 | 0 | 1 | 1 | 0 | 1 | 1 | 0 | 1 | 1 | 0 | 1 | 1 | 0 | 1 |
| 11 | 1 | 0 | 1 | 1 | 1 | 0 | 1 | 1 | 0 | 1 | 1 | 1 | 1 | 1 | 0 | 1 | 1 | 1 |
| 12 | 1 | 0 | 1 | 1 | 1 | 0 | 1 | 1 | 0 | 1 | 0 | 0 | 1 | 1 | 0 | 1 | 0 | 0 |
| 13 | 0 | 0 | 1 | 1 | 0 | 0 | 1 | 0 | 0 | 1 | 1 | 1 | 1 | 0 | 0 | 1 | 1 | 1 |
| 14 | 0 | 0 | 1 | 1 | 0 | 0 | 1 | 0 | 0 | 1 | 1 | 1 | 1 | 0 | 0 | 1 | 1 | 1 |

(B)

| Bit # | $N_{pilot}=7$ | | | | | | | $N_{pilot}=8$ | | | | | | | |
|---|---|---|---|---|---|---|---|---|---|---|---|---|---|---|---|
| | 0 | 1 | 2 | 3 | 4 | 5 | 6 | 0 | 1 | 2 | 3 | 4 | 5 | 6 | 7 |
| Slot #0 | 1 | 1 | 1 | 1 | 1 | 0 | 1 | 1 | 1 | 1 | 1 | 1 | 1 | 1 | 0 |
| 1 | 1 | 0 | 0 | 1 | 1 | 0 | 1 | 1 | 0 | 1 | 0 | 1 | 1 | 1 | 0 |
| 2 | 1 | 0 | 1 | 1 | 0 | 1 | 1 | 1 | 0 | 1 | 1 | 1 | 0 | 1 | 1 |
| 3 | 1 | 0 | 0 | 1 | 0 | 0 | 1 | 1 | 0 | 1 | 0 | 1 | 0 | 1 | 0 |
| 4 | 1 | 1 | 0 | 1 | 0 | 1 | 1 | 1 | 1 | 1 | 0 | 1 | 0 | 1 | 1 |
| 5 | 1 | 1 | 1 | 1 | 1 | 0 | 1 | 1 | 1 | 1 | 1 | 1 | 1 | 1 | 0 |
| 6 | 1 | 1 | 1 | 1 | 0 | 0 | 1 | 1 | 1 | 1 | 1 | 1 | 0 | 1 | 0 |
| 7 | 1 | 1 | 0 | 1 | 0 | 0 | 1 | 1 | 1 | 1 | 0 | 1 | 0 | 1 | 0 |
| 8 | 1 | 0 | 1 | 1 | 1 | 0 | 1 | 1 | 0 | 1 | 1 | 1 | 1 | 1 | 0 |
| 9 | 1 | 1 | 1 | 1 | 1 | 1 | 1 | 1 | 1 | 1 | 1 | 1 | 1 | 1 | 1 |
| 10 | 1 | 0 | 1 | 1 | 0 | 1 | 1 | 1 | 0 | 1 | 1 | 1 | 0 | 1 | 1 |
| 11 | 1 | 1 | 0 | 1 | 1 | 1 | 1 | 1 | 1 | 1 | 0 | 1 | 1 | 1 | 1 |
| 12 | 1 | 1 | 0 | 1 | 0 | 0 | 1 | 1 | 1 | 1 | 0 | 1 | 0 | 1 | 0 |
| 13 | 1 | 0 | 0 | 1 | 1 | 1 | 1 | 1 | 0 | 1 | 0 | 1 | 1 | 1 | 1 |
| 14 | 1 | 0 | 0 | 1 | 1 | 1 | 1 | 1 | 0 | 1 | 0 | 1 | 1 | 1 | 1 |

EP 1 991 016 A1

## FIG. 29

## FIG. 30

## INTERNATIONAL SEARCH REPORT

| International application No. |
| --- |
| PCT/JP2006/302050 |

A.  CLASSIFICATION OF SUBJECT MATTER
*H04Q7/36*(2006.01), *H04B7/26*(2006.01), *H04Q7/38*(2006.01)

According to International Patent Classification (IPC) or to both national classification and IPC

B.  FIELDS SEARCHED

Minimum documentation searched (classification system followed by classification symbols)
*H04Q7/36*(2006.01), *H04B7/26*(2006.01), *H04Q7/38*(2006.01)

Documentation searched other than minimum documentation to the extent that such documents are included in the fields searched
Jitsuyo Shinan Koho          1922-1996     Jitsuyo Shinan Toroku Koho     1996-2006
Kokai Jitsuyo Shinan Koho    1971-2006     Toroku Jitsuyo Shinan Koho     1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | JP 2001-339758 A  (Matsushita Electric<br>Industrial Co., Ltd.),<br>07 December, 2001 (07.12.01),<br>Par. Nos. [0068] to [0085]; Figs. 7 to 9<br>& WO 01/091491 A1        & EP 001204282 A1<br>& US 2002/016187 A1     & AU 005881401 A<br>& CN 001593067 A | 25,26<br>1-24,27,28 |
| Y | JP 2002-111627 A  (Sony International),<br>12 April, 2002 (12.04.02),<br>Par. No. [0008]; Fig. 3<br>& EP 001178641 A        & US 2002/0034158 A1<br>& CN 001336749 A | 25,26 |

| ☒   Further documents are listed in the continuation of Box C. | ☐   See patent family annex. |
| --- | --- |

\*      Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>    25 April, 2006 (25.04.06) | Date of mailing of the international search report<br>    02 May, 2006 (02.05.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/302050 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-244964 A  (Samsung Electronics Co., Ltd.), 08 September, 2005 (08.09.05), Par. Nos. [0022] to [0065]; Figs. 3 to 9 (Family: none) | 1-28 |
| A | JP 2005-223671 A  (Matsushita Electric Industrial Co., Ltd.), 18 August, 2005 (18.08.05), Par. Nos. [0018] to [0048] (Family: none) | 1-28 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. C. CHU.** Polyphase Codes With Good Periodic Correlation Properties. *IEEE Transactions on Information Theory,* July 1972, 531-532